(19) Europäisches Patentamt
European Patent Office
Office européen des brevets

(11) **EP 4 228 021 A1**

(12) **EUROPEAN PATENT APPLICATION**

(43) Date of publication:
**16.08.2023  Bulletin 2023/33**

(21) Application number: **23154601.1**

(22) Date of filing: **02.02.2023**

(51) International Patent Classification (IPC):
$H01M\ 4/04^{(2006.01)}$       $H01M\ 4/131^{(2010.01)}$
$H01M\ 4/136^{(2010.01)}$      $H01M\ 4/1391^{(2010.01)}$
$H01M\ 4/1397^{(2010.01)}$     $H01M\ 4/36^{(2006.01)}$
$H01M\ 4/48^{(2010.01)}$       $H01M\ 4/485^{(2010.01)}$
$H01M\ 4/58^{(2010.01)}$       $H01M\ 4/62^{(2006.01)}$
$H01M\ 4/66^{(2006.01)}$       $H01M\ 4/70^{(2006.01)}$
$H01M\ 10/052^{(2010.01)}$     $H01M\ 4/02^{(2006.01)}$

(52) Cooperative Patent Classification (CPC):
H01M 4/0435; H01M 4/131; H01M 4/136;
H01M 4/1391; H01M 4/1397; H01M 4/366;
H01M 4/483; H01M 4/485; H01M 4/58;
H01M 4/623; H01M 4/625; H01M 4/667;
H01M 4/668; H01M 4/70; H01M 10/052;      (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.02.2022  KR 20220014384**

(71) Applicant: **Samsung SDI Co., Ltd.**
**Yongin-si, Gyeonggi-do 17084 (KR)**

(72) Inventors:
• **LEE, Jinhyon**
  **17084 Yongin-si, Gyeonggi-do (KR)**

• **KWON, Ilkyong**
  **17084 Yongin-si, Gyeonggi-do (KR)**
• **NAM, Hyun**
  **17084 Yongin-si, Gyeonggi-do (KR)**
• **LEE, Donggeun**
  **17084 Yongin-si, Gyeonggi-do (KR)**
• **PYUN, Ahram**
  **17084 Yongin-si, Gyeonggi-do (KR)**

(74) Representative: **Gulde & Partner**
**Patent- und Rechtsanwaltskanzlei mbB**
**Wallstraße 58/59**
**10179 Berlin (DE)**

(54) **ELECTRODE, LITHIUM BATTERY INCLUDING THE SAME, AND METHOD OF PREPARING THE ELECTRODE**

(57)    An electrode, a lithium secondary battery including the same, and a method of preparing the electrode are provided. The electrode includes an electrode active material layer including an electrode active material and a binder, and having a plurality of through-holes; an electrode current collector on one surface of the electrode active material layer or between two surfaces of the electrode active material layer; and an interlayer between the electrode active material layer and the electrode current collector, wherein the electrode active material layer is a self-standing film and the plurality of through-holes included in the electrode active material layer extend to the interlayer.

**EP 4 228 021 A1**

**(Cont. next page)**

FIG. 1A

FIG. 1B

(52) Cooperative Patent Classification (CPC): (Cont.)
H01M 2004/021

**Description**

**BACKGROUND**

**1. Field**

One or more embodiments relate to an electrode, a lithium battery employing the same, and a method of preparing the electrode.

**2. Description of the Related Art**

For miniaturization and high performance of various devices, such as lithium batteries, high energy density is becoming more important, in addition to small-size and lightweight characteristics. In other words, high-capacity lithium batteries are becoming important.

In addition, due to the advent of various wearable devices, lithium batteries with increased flexibility are becoming more important.

To realize lithium batteries suitable for such utilization, electrodes having flexibility as well as a high loading are being studied.

In an electrode having a high loading, the distribution of constituents within the electrode may become non-uniform (e.g., substantially non-uniform) and the density near the electrode surface may increase. Accordingly, the performance of a lithium battery employing such an electrode may deteriorate.

An electrode capable of preventing or reducing the deterioration of lithium battery performance is desirable (e.g., required).

**SUMMARY**

The invention is defined by the appended claims. Aspects of one or more embodiments of the present disclosure are directed towards a novel electrode that prevents or reduces deterioration of battery performance by including through-holes in an electrode active material layer.

Aspects of one or more embodiments of the present disclosure are directed towards a novel electrode that prevents or reduces deterioration of battery performance by having substantially uniform distribution of constituent components inside the electrode.

Aspects of one or more embodiments of the present disclosure are directed towards a lithium battery including the electrode.

Aspects of one or more embodiments of the present disclosure are directed towards a method of preparing the electrode.

Additional aspects will be set forth in part in the description which follows and, in part, will be apparent from the description, or may be learned by practice of the presented embodiments of the disclosure.

According to one or more embodiments, an electrode includes an electrode active material layer including an electrode active material and a binder, and having a plurality of through-holes, an electrode current collector on one surface of the electrode active material layer or between two surfaces of the electrode active material layer, and an interlayer between the electrode active material layer and the electrode current collector, wherein the electrode active material layer is a self-standing film, and the plurality of through-holes of the electrode active material layer extend to the interlayer.

According to one or more embodiments, a lithium battery includes a cathode, an anode, and an electrolyte between the cathode and the anode, wherein one or more of the cathode or the electrode is the electrode.

According to one or more embodiments, a method of preparing the electrode includes preparing a dry mixture by dry mixing an electrode active material, a dry conductive material, and a dry binder, preparing a self-standing film by roll-pressing or squeezing the dry mixture, introducing a plurality of through-holes into the self-standing film, applying an electrode current collector having an interlayer on one surface of the electrode current collector or two surfaces (e.g., (e.g., oppositely facing surfaces) of the electrode current collector, and arranging the self-standing film on the one surface of the electrode current collector or the two surfaces of the electrode current collector.

**BRIEF DESCRIPTION OF THE DRAWINGS**

The above and other aspects, features, and/or principles of certain embodiments of the disclosure will be more apparent from the following description taken in conjunction with the accompanying drawings, in which:

FIGs. 1A and 1B are each a side view of an electrode according to one or more embodiments of the present disclosure;

FIGs. 2A and 2B are each a side view of an electrode of the related art;

FIGs. 3A and 3B are each a side view of an electrode according to one or more embodiments of the present disclosure;

FIG. 4 is a schematic, perspective diagram of an electrode according to one or more embodiments of the present disclosure;

FIG. 5 is a schematic, perspective diagram of an electrode according to one or more embodiments of the present disclosure;

FIGs. 6A and 6B are each a side view of an electrode according to one or more embodiments of the present disclosure;

FIG. 7 is a schematic, perspective diagram of an electrode according to one or more embodiments of the present disclosure;

FIG. 8 is a schematic, perspective diagram of an electrode according to one or more embodiments of the present disclosure;

FIGS. 9A - 9F are each a plan view of an electrode according to one or more embodiments of the present disclosure;

FIG. 10 is a side view of an electrode assembly according to one or more embodiments of the present disclosure;

FIG. 11 is a side view of an electrode assembly according to one or more embodiments of the present disclosure;

FIG. 12 is a front view of an electrode assembly of FIG. 11, according to one or more embodiments of the present disclosure;

FIG. 13 is a schematic, perspective diagram of a lithium battery according to one or more embodiments of the present disclosure;

FIG. 14 is a schematic, perspective diagram of a lithium battery according to one or more embodiments of the present disclosure; and

FIG. 15 is a schematic, perspective diagram of a lithium battery according to one or more embodiments of the present disclosure.

## DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

As used herein, the term "and/or" includes any and all combinations of one or more of the associated listed items. Expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

The present disclosure described hereinbelow may have one or more suitable modifications and one or more suitable embodiments, example embodiments will be illustrated in the drawings and more fully described in the detailed description. The present disclosure, however, should not be construed as limited to the example embodiments set forth herein, and rather, should be understood as covering all modifications, equivalents, or alternatives falling within the scope of the present disclosure.

The terminology used herein is for the purpose of describing particular embodiments only, and is not intended to be limiting the present disclosure. As used herein, the singular forms "a," "an" and "the" are intended to include the plural forms as well, unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. As used herein, "/" may be interpreted as "and", or as "or" depending on the context.

In the drawings, thicknesses may be magnified or exaggerated to clearly illustrate various layers and regions. Like reference numbers may refer to like elements throughout, and duplicative descriptions thereof may not be provided the drawings and the following description.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

Although the terms "first," "second," etc. may be used herein to describe various elements, these elements should not be limited by these terms. These terms are only used to distinguish one element from another element.

As used herein, the term "dry" refers to a state that does not intentionally contact a solvent such as a processing solvent or a state that does not intentionally include a solvent. For example, a dry conductive material refers to a dry conductive material that does not intentionally contact a solvent or a dry conductive material that does not intentionally include a solvent. For example, a dry binder refers to a binder that does not intentionally contact a solvent or a binder that does not intentionally include a solvent. For example, a binder that is in a liquid state at room temperature without being mixed with a solvent is a dry binder.

As used in the present specification, a length of an electrode, a thickness of an electrode, a diameter of through-holes, a depth of through-holes, and a surface area of through-holes refer to an average length of the electrode, an average thickness of the electrode, an average diameter of the through-holes, an average depth of the through-holes, and an average surface area of the through-holes, respectively. An average value is, for example, an arithmetic mean of values measured at a plurality of points. A length of an electrode, a thickness of an electrode, a diameter of through-holes, a depth of through-holes, and a surface area of through-holes may be each measured utilizing a micrometer, or from a scanning electron microscopic image, or an optical microscopic image.

The term "particle diameter" as used herein refers to a diameter or an average diameter of particles when the particles are spherical, and refers to a major axis or an average major axis length of particles when the particles are non-spherical. The particle diameter of the particles may be measured utilizing a particle size analyzer (PSA). The "particle size" of the particles refers to, for example, the average particle size. The average particle diameter may be, for example, a median particle diameter (D50). The median particle diameter D50 refers to the size of particles corresponding to 50 % cumulative volume in a distribution of particle sizes measured by a laser diffraction method, counted from the side of particles having the smallest particle size.

In addition, the term "diameter" of, e.g., a plurality of through-holes, as used herein refers to a diameter or an average diameter of holes when the holes are circular, and refers to a major axis or an average major axis length of holes when the holes are non-circular..

Hereinbelow, an electrode, a lithium battery including the same, and a method of preparing the electrode according to embodiments will be described in greater detail.

An electrode according to one or more embodiments includes: an electrode active material layer including an electrode active material, a binder, and a plurality of through-holes; an electrode current collector arranged on one surface of the electrode active material layer or between two or both surfaces of the electrode active material layer (e.g., oppositely facing surfaces or when there are two electrode active material layers); and an interlayer arranged between the electrode active material layer and the electrode current collector, wherein the electrode active material layer is a self-standing film and the plurality of through-holes included in the electrode active material layer extend to the interlayer.

By arranging, for example, an interlayer having an adhesive force between the electrode active material layer and the electrode current collector, the electrode active material layer and the electrode current collector may be laminated without a strong pressure during a preparation process of the electrode. Accordingly, the electrode current collector may have a substantially uniform surface. As a result, during a charge/discharge process of a lithium battery, a local side reaction due to an imbalance in current density between the electrode active material layer and the electrode current collector according to the position of the electrode current collector may be prevented or reduced. In contrast, in an electrode of the art, an electrode active material layer and an electrode current collector may be roll-pressed with a strong pressure to obtain a high binding force between the electrode active material layer and the electrode current collector. Accordingly, the electrode current collector may have a non-uniform (e.g., substantially non-uniform) surface. As a result, during a charge/discharge process of a lithium battery, a local side reaction due to an imbalance in current density between the electrode active material layer and the electrode current collector according to the position of the electrode current collector may be increased.

In one or more embodiments, as the electrode active material layer includes a plurality of through-holes, high-rate capability of the lithium battery may be improved. For example, as the electrolyte solution is disposed in the plurality of through-holes, the contact area between the electrode and the electrolyte solution may increase, and a conduction distance of lithium ions inside the electrode active material layer may decrease. For example, the plurality of through-holes may function as ion conduction channels. Accordingly, by utilizing the plurality of through-holes, an increase in internal resistance and degradation of high-rate capability due to an imbalance of electrode reactions on the electrode surface and inside the electrode may be effectively suppressed or reduced. For example, in a high-density battery including an electrode with an increased thickness and/or a laminated body thereof, deterioration in cycle characteristics at a high current density may be effectively prevented or reduced. Consequently, in a lithium battery employing the electrode including the plurality of through-holes, the internal resistance may be decreased, and the degradation in high-rate capability may be prevented or reduced. In one or more embodiments, as the electrode active material layer includes the plurality of through-holes, flexibility of the lithium battery may be improved. Accordingly, a lithium battery including the electrode with improved flexibility may be more suitable for utilization in shape-variable devices, such as wearable devices.

In one or more embodiments, when the plurality of through-holes extend to the interlayer, an imbalance in current density between the outermost surface of the electrode active material layer and the inside of the electrode active material layer adjacent to the electrode current collector may be prevented or reduced. Accordingly, as the local side reaction due to the imbalance of current density is prevented or reduced, partial deterioration of the electrode active material layer and deterioration of the electrode due to the local side reaction may be prevented or reduced. Consequently, the life characteristics of a lithium battery may be improved by employing the electrode having the plurality of through holes extended to the interlayer.

In the electrode disclosed herein, the electrode current collector may constitute a bottom portion of the plurality of through-holes, and thus may block or substantially block one end of the plurality of through-holes. In this regard, the bottom portion of the plurality of through-holes is formed by the electrode current collector, and thus the electrode disclosed herein may be distinguished from an electrode of the art in which a bottom portion of through-holes is formed by an electrode active material layer. Because the bottom portion of the plurality of through-holes is constituted by the electrode current collector, ion conduction to the electrode active material layer adjacent to the electrode current collector may be easily performed.

In an electrode of the art, through-holes may be formed in an electrode by drilling so that a burr may be generated at the end of the through-holes in the process of through-hole formation, or a part of the electrode current collector may be depressed. Accordingly, due to formation of such a defect between the electrode active material layer adjacent to the through holes and the electrode current collector, a non-uniform (e.g., substantially non-uniform) current density may occur through the defects. Therefore, as the electrode proceeds to deteriorate, lifespan characteristics of a lithium battery employing such an electrode may be degraded.

However, in the electrode current collector included in the electrode disclosed herein, extension from the through-holes or defects induced therefrom may be prevented or reduced, and thus such defects may not be substantially included. For example, the electrode current collector may not include (e.g., may exclude) a burr or a dent extending from the through holes. Accordingly, a lithium battery employing such an electrode may have improved lifespan characteristics. The electrode according to the disclosure may be prepared by, for example, forming through-holes in the electrode active material layer and laminating the electrode current collector and the electrode active material layer including the through-holes. Accordingly, formation of defects in the current collector caused during a process of introducing the through-holes in the electrode current collector of the electrode of the art may be prevented or reduced.

Because the electrode active material layer is a self-standing film, the electrode active material layer may, for example, maintain a film shape without a support. Accordingly, the electrode active material layer may be prepared as a separate self-standing film and arranged on the electrode current collector.

In the electrode disclosed herein, the interlayer may be arranged between the through-holes and the electrode current collector, and thus may separate the through-holes and the electrode current collector. As the interlayer is arranged between one end of the through-holes and the electrode current collector, a direct contact between an electrolyte and the electrode current collector may be blocked. Accordingly, a side reaction such as decomposition of an electrolyte on a surface of the electrode current collector may be prevented or reduced. Accordingly, the charge/discharge characteristics of a lithium battery including such an electrode may be further improved.

In the electrode disclosed herein, a diameter of one end of the through-holes (e.g., an average diameter (or an average major axis length for non-circular through-holes) of the one ends of the through-holes) that are in contact with the interlayer or the electrode current collector may be greater than a diameter of the other end of the through-holes (e.g., an average diameter (or an average major axis length for non-circular through-holes) of the other ends of the through-holes) exposed to a surface of the electrode active material layer. As the diameter of one end of the through-hole that is in contact with the interlayer or the electrode current collector is larger than the diameter of the other end of the through-hole that is exposed to the surface of the electrode active material layer, a contact area between the electrolyte and the electrode active material layer inside the electrode active material layer may become wider, and thus an imbalance in current density between the surface of the electrode active material layer and the inside of the electrode active material layer may be effectively prevented or reduced. Accordingly, the charge/discharge characteristics of a lithium battery employing such an electrode may be further improved. A ratio of the diameter ($d_a$) of the other end of the through-hole exposed to the surface of the electrode active material layer to the diameter ($d_b$) of the one end of the through-hole in contact with the interlayer or the electrode current collector, i.e., $d_a:d_b$, may be greater than 1:1. For example, the ratio $d_a:d_b$ may be in a range of 1: 1.01 to 2, 1:1.01 to 1.5, or 1:1.01 to 1.1. The ratio of the diameter $d_a$ of the other end of the through-hole exposed to the surface of the electrode active material layer to the diameter $d_b$ of the one end of the through-hole in contact with the interlayer or the electrode current collector may be measured utilizing a scanning electron microscope with respect to a cross-section of the electrode.

A material forming the electrode current collector may be a material that does not react with lithium, i.e., any material that does not form an alloy or a compound with lithium and has conductivity (e.g., is a conductor). A metal substrate may be, for example, a metal or an alloy. The metal substrate may include (e.g., may consist of), for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The electrode current collector may have, for example, a shape selected from a sheet, a foil, a film, a plate, a porous body, a mesoporous body, a through-hole containing body, a polygonal ring body, a meshed body, a foaming body, and a non-woven body, but is not limited thereto. Any shape available in the art may be utilized.

The electrode current collector may have a comparatively reduced thickness compared to an electrode current collector included in an electrode of the art. Accordingly, the electrode disclosed herein which includes, for example, a thin-film current collector, may be distinguished from an electrode of the art which includes a thick-film current collector. When the electrode according to one or more embodiments employs a thin-film current collector having a reduced thickness, a relative thickness of an electrode active material layer in the electrode including the thin-film current collector may be increased. Consequently, a lithium battery employing such an electrode may have an increased energy density. The thickness of the electrode current collector including the metal substrate and the interlayer may be, for example, less than 15 $\mu$m, less than or equal to 14.5 $\mu$m, or less than or equal to 14 $\mu$m. The thickness of the electrode current collector may be, for example, about 0.1 $\mu$m to less than about 15 $\mu$m, about 1 $\mu$m to about 14.5 $\mu$m, about 2 $\mu$m to about 14 $\mu$m, about 3 $\mu$m to about 14 $\mu$m, about 5 $\mu$m to about 14 $\mu$m, or about 10 $\mu$m to about 14 $\mu$m.

The interlayer may be, for example, directly arranged on one surface or two or both surfaces of the electrode current collector (e.g., when there are two interlayers). Accordingly, other layers may not be arranged between the electrode current collector and the interlayer. When the interlayer is directly arranged on one surface or both surfaces of the electrode current collector, the binding force between the electrode current collector and the electrode active material layer may be further improved.

A thickness of the interlayer may be, for example, less than or equal to 30 % of the thickness of the electrode current collector. The thickness of the interlayer may be, for example, about 0.01 % to about 30 %, about 0.1 % to about 30 %, about 0.5 % to about 30 %, about 1 % to about 25 %, about 1 % to about 20 %, about 1 % to about 15 %, about 1 % to about 10 %, about 1 % to about 5 %, or about 1 % to about 3 %, of the thickness of the electrode current collector. The thickness of the interlayer may be, for example, about 10 nm to about 5 $\mu$m, about 50 nm to about 5 $\mu$m, about 200 nm to about 4 $\mu$m, about 500 nm to about 3 $\mu$m, about 500 nm to about 2 $\mu$m, about 500 nm to about 1.5 $\mu$m, or about 700 nm to about 1.3 $\mu$m. When the thickness of the interlayer is within the ranges above, the binding force between the electrode current collector and the electrode active material layer may be further improved, and accordingly, an increase in interfacial resistance may be suppressed or reduced.

The interlayer may include, for example, a binder. When the interlayer includes a binder, the binding force between the electrode current collector and the electrode current collector may be further improved. The binder included in the interlayer may be, for example, a conductive binder or a non-conductive binder.

The conductive binder may be, for example, an ion conductive binder and/or an electron conductive binder. A binder having both (e.g., simultaneously) ion conductivity and electron conductivity may belong to both (e.g., simultaneously) an ion conductive binder and an electron conductive binder.

Examples of the ion conductive binder include polystyrene sulfonate (PSS), a polyvinylidene fluoride-hexafluoropropylene (PVDF-HFP) copolymer, polyvinyl fluoride (PVF), polyvinylidene fluoride (PVDF), poly(methyl methacrylate) (PMMA), polyethylene oxide (PEO), polyethylene glycol (PEG), polyacrylonitrile (PAN), polytetrafluoroethylene (PTFE), polyethylene dioxythiophene (PEDOT), polypyrrole (PPY), polyacrylonitrile (PAN), polyaniline, polyacetylene, and/or the like. The ion conductive binder may include a polar functional group. Examples of the ion conductive binder including a polar functional group include Nafion, Aquivion, Flemion, Gore, Aciplex, Morgane ADP, sulfonated poly(ether ketone) (SPEEK), sulfonated poly(arylene ether ketone sulfone) (SPAEKS), sulfonated poly(aryl ether ketone) (SPAEK), poly[bis(benzimidazobenzisoquinolinones)], (SPBIBI), poly(styrene sulfonate) (PSS), lithium 9,10-diphenylanthracene-2-sulfonate (DPASLi$^+$), and/or the like. Examples of the electron conductive binder include polyacetylene, polythiophene, polypyrrole, poly(p-phenylene), poly(phenylene vinylene), poly(phenylene sulfide), polyaniline, and/or the like. The interlayer may be, for example, a conductive layer including a conductive polymer.

The binder included in the interlayer may be, for example, selected from binders included in the electrode active material layer. The interlayer may include the same binder as the binder included in the electrode active material layer. The binder included in the interlayer may be, for example, a fluorine-based binder. The fluorine-based binder included in the interlayer may be, for example, PVDF. The interlayer may be, for example, arranged on the electrode current collector by a dry method or a wet method. The interlayer may be, for example, a bonding layer including a binder.

The interlayer may further include, for example, a carbon-based conductive material. The carbon-based conductive material included in the interlayer may be selected from carbon-based conductive materials included in the electrode active material layer. The interlayer may include the same carbon-based conductive material as the carbon-based conductive material included in the electrode active material layer. When the interlayer includes the carbon-based conductive material, the interlayer may become, for example, a conductive layer. The interlayer may be, for example, a conductive layer including a binder and a carbon-based conductive material.

The interlayer may be arranged on the electrode current collector by, for example, a dry method such as deposition, e.g., CVD, PVD, and/or the like. The interlayer may be arranged on the electrode current collector by, for example, a wet method, such as spin coating, dip coating, and/or the like. The interlayer may be arranged on the electrode current collector by, for example, depositing a carbon-based conductive material on the electrode current collector by, for example, deposition. A dry-coated interlayer may include (e.g., may consist of) a carbon-based conductive material, and may not include (e.g., may exclude) a binder. In one or more embodiments, the interlayer may be arranged on the electrode current collector by, for example, coating and drying a composition including a carbon-based conductive material, a binder, and a solvent, on a surface of the electrode current collector. The interlayer may have a single-layer structure, or may be a multi-layer structure including multiple layers.

One surface of the electrode active material layer included in the electrode disclosed herein may include, for example, a first opening in which a plurality of through-holes are disposed. For example, a surface area of the first opening may be, for example, less than or equal to 99 %, less than or equal to 90 %, less than or equal to 50 %, less than or equal to 40 %, less than or equal to 30 %, less than or equal to 20 %, or less than or equal to 10 %, of the entire surface of the one surface of the electrode active material layer. The surface area of the first opening may be, for example, about 0.1 % to about 99 %, about 0.1 % to about 90 %, about 0.1 % to about 50 %, about 0.1 % to about 20 %, about 0.5 % to about 10 %, about 0.2 % to about 15 %, about 0.2 % to about 10 %, or about 0.2 % to about 5 %, of the entire surface of the one surface of the electrode active material layer. When the surface area of the first opening occupied by the through-holes is within the ranges above, the cycle characteristics of a lithium battery may be further improved. The surface area of the first opening may be the area of the surface of the electrode active material layer occupied by the through-holes.

The surface area (area A) of the first opening in which the plurality of through-holes are arranged on one surface of the electrode active material layer may be smaller than the remaining surface areas (area B) of the electrode active material layer except for the surface area of the first opening. For example, area A may be less than or equal to 99 %, less than or equal to 90 %, less than or equal to 50 %, less than or equal to 40 %, less than or equal to 30 %, less than or equal to 20 %, or less than or equal to 10 %, of area B. Area A may be, for example, about 0.1 % to about 99 %, about 0.1 % to about 90 %, about 0.1 % to about 50 %, about 0.1 % to about 30 %, about 0.1 % to about 20 %, about 0.5 % to about 15 %, about 0.5 % to about 10 %, or about 0.5 % to about 5 %, of area B. When the surface of the first opening occupied by the through-holes is within the ranges above, the cycle characteristics of a lithium battery may be further improved.

An average diameter (or average major axis length for non-circular through-holes) (d1) of the plurality of through-holes may be, for example, about 0.1 $\mu$m to about 20 $\mu$m or about 0.1 $\mu$m to about 10 $\mu$m. When the average diameter of the plurality of through-holes is within the ranges above, the cycle characteristics of a lithium battery employing the electrode including the plurality of through-holes may be further improved.

A ratio (d1/T1) of the average diameter (d1) of the plurality of through-holes to a thickness (T1) of the electrode active material layer may be about 0.001 to about 0.2, about 0.001 to about 0.15, about 0.001 to about 0.1, about 0.001 to about 0.05, or about 0.001 to about 0.01. As the ratio (d1/T1) of the average diameter (d1) of the plurality of through-holes to the thickness (T1) of the electrode active material layer has a value in the above ranges, the cycle characteristics of a lithium battery that employs an electrode containing the plurality of through-holes may be further enhanced.

The plurality of through-holes included in the electrode may be, for example, arranged regularly at constant intervals in the electrode active material layer. When the plurality of through-holes are positioned regularly in the electrode active material layer, a regular current density distribution inside the electrode may be maintained. Accordingly, local deterioration in the electrode active material layer caused by an irregular current distribution may be prevented or reduced, and consequently, degradation in the cycle characteristics of a lithium battery may be prevented or reduced.

The plurality of through-holes included in the electrode may be, for example, periodically arranged at constant intervals in the electrode active material layer. When the plurality of through-holes are periodically arranged in the electrode active material layer, a periodic current density distribution may be maintained inside the electrode. Accordingly, local deterioration in the electrode active material layer caused by a non-periodic current distribution may be prevented or reduced, and consequently, degradation in the cycle characteristics of a lithium battery may be prevented or reduced.

The plurality of through-holes included in the electrode may be, for example, arranged two-dimensionally or three-dimensionally to have a lattice structure. When the plurality of through-holes are two-dimensionally or three-dimensionally arranged to have a lattice structure in the electrode active material layer included in the electrode, the cycle characteristics of a lithium battery including such an electrode may be further improved.

An inlet of the through-hole included in the electrode may have, for example, a circular shape, an oval shape, a triangular shape, a tetragonal shape, a pentagonal shape, a hexagonal shape, an alphabet shape, or a doughnut shape, but is not limited thereto. Any shape that may be utilized in the art to form through-holes may be utilized. The alphabet shape may include, for example, at least one shape selected from an A shape to a Z shape. The alphabet shape may include, for example, at least one shape selected from an X shape, an H shape, a T shape, an L shape, and/or the like. The inlet of the through-hole may have, for example, a polyhedral shape. The shape of the through-hole may be determined from a scanning electron microscopic image or an optical microscopic image of the surface of the electrode.

For example, the through-holes included in the electrode may be arranged to penetrate the electrode active material layer by forming an angle in a range of about 60 degrees to about 120 degrees, about 70 degrees to about 110 degrees, or about 80 degrees to about 100 degrees, with one surface or both surfaces of the electrode active material layer. When the through-holes are arranged at such an angle, the cycle characteristics of a lithium battery may be further improved.

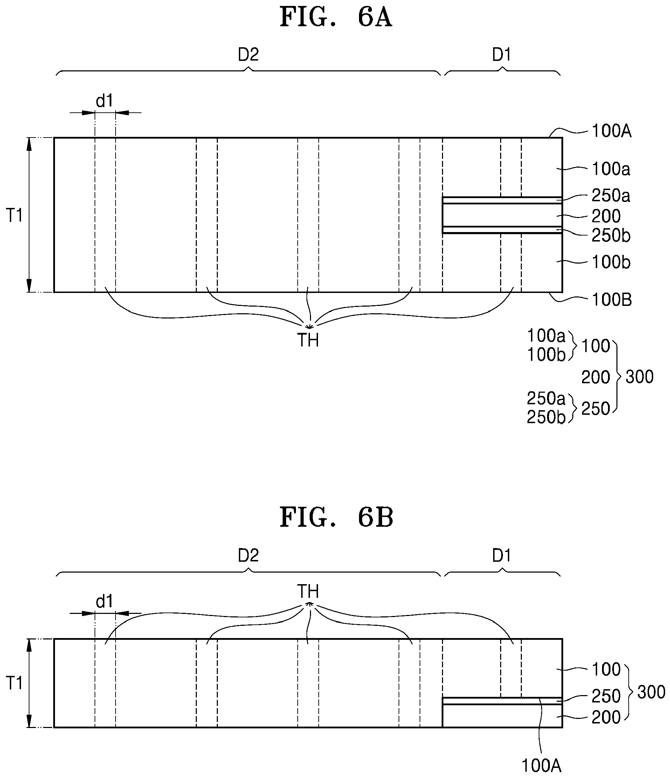

The electrode may include: a first domain including the electrode active material layer, and the electrode current collector that is arranged on one surface or between both surfaces of the electrode active material layer; and a second domain including the electrode active material layer and free of the electrode current collector on one surface or between both surfaces of the electrode active material layer. Referring to Figs. 6A to 6B, a cross-section of the electrode in a thickness direction may include, for example, a structure in which the electrode active material layer and the through-holes are alternately aligned and/or arranged in the second domain. When the cross-section of the electrode has a structure in which the electrode active material layer and the through-holes are alternately aligned and/or arranged, the cycle characteristics of a lithium battery including such an electrode may be further improved.

The binder included in the electrode active material layer may be, for example, a dry binder. The dry binder may be, for example, a binder that is not impregnated, dissolved, nor dispersed in a solvent. The dry binder may be, for example, a binder that includes a solvent or is not in contact with a solvent.

The dry binder may be, for example, a fibrillized binder. The fibrillized binder may serve as a matrix that supports and binds an electrode active material and other components included in the electrode active material layer. The fibrillized binder may be, for example, determined to have a fibrous form from a scanning electron microscopic image of the cross-section of the electrode. The fibrillized binder may have, for example, an aspect ratio of greater than or equal to 10, greater than or equal to 20, greater than or equal to 50, or greater than or equal to 100.

Examples of the dry binder include, PTFE, a PVDF-HFP copolymer, PVDF, polyvinyl alcohol, polyacrylonitrile, carboxymethylcellulose (CMC), starch, hydroxypropyl cellulose, cellulose, polyvinyl pyrrolidone, polyethylene, polypropylene, an ethylene-propylene-diene polymer (EPDM), a sulfonated-EPDM, a styrene butadiene rubber (SBR), a fluoro rubber, a copolymer thereof, and/or the like, but are not limited thereto. Any binder utilized in the preparation of a dry electrode may be utilized. The dry binder may include, in particular, a fluorine-based binder. The fluorine-based binder may be, for example, PTFE, A PVDF-HFP copolymer, or PVDF.

An amount of the dry binder included in the electrode active material layer may be, for example, in a range of about 1 wt% to about 10 wt% or about 1 wt% to about 5 wt%, based on the total weight of the electrode active material layer. When the amount of the dry binder is included within the ranges above in the electrode active material layer, the binding force of the electrode may be improved and the electrode may maintain a high energy density.

The electrode active material layer may further include, for example, a conductive material. The conductive material may be, for example, a dry conductive material. The dry conductive material may be, for example, a conductive material that is not impregnated, dissolved nor dispersed in a solvent. The dry conductive material may be, for example, a conductive material that includes a solvent or is not in contact with a solvent. The conductive material may be, for example, a carbon-based conductive material. Examples of the carbon-based conductive material include carbon black, a graphite particle, natural graphite, artificial graphite, acetylene black, Ketjen black, a carbon fiber, a carbon nanotube, and/or the like, but are not limited thereto. Any material available as a carbon-based conductive material in the art may be utilized.

An amount of the dry conductive material included in the electrode active material layer may be, for example, in a range of about 1 wt% to about 10 wt% or about 1 wt% to about 5 wt%, based on the total weight of the electrode active material layer. When the amount of the dry conductive material is included within the ranges above in the electrode active material layer, conductivity of the electrode may be improved and the electrode may maintain a high energy density.

Because the electrode active material layer is prepared by a dry method, the electrode active material layer may not include (e.g., may exclude) a processing solvent that is intentionally added. For example, the electrode active material layer may not include (e.g., may exclude) a residual processing solvent. Although a trace amount of unintentional solvent may remain in the electrode active material layer, such a solvent is not an intentionally added processing solvent. Accordingly, the electrode active material layer may be distinguished from a wet electrode active material layer that is prepared by mixing components and a processing solvent and then removing some or all of the processing solvent therefrom by drying.

In the electrode, when the electrode active material layer included in a first domain is measured utilizing a surface and interfacial measuring (e.g., cutting) analysis system (SAICAS), with respect to the entire thickness of the electrode active material layer, a rate of change in a vertical relative force ($F_{VR}$) according to the depth from a first point, which is spaced apart by 5 % from the surface of the electrode active material layer in the direction to the electrode current collector, to a second point, which is spaced apart by 5 % from the surface of the electrode current collector,

may be, for example, less than or equal to 300 %. The rate of change in the vertical relative force may be, for example, about 10 % to about 300 %, about 10 % to about 250 %, about 10 % to about 200 %, about 10 % to about 150 %, or about 10 % to about 100 %. The second point, which is spaced apart by 5 % from the surface of the electrode current collector in the direction to the electrode active material layer, may correspond to, for example, a point that is spaced apart by 95 % from the surface of the electrode active material layer in the direction to the electrode current collector, with respect to the total thickness of the electrode active material layer. The vertical relative force may be calculated by Equation 1. The SAICAS measurement method may be, for example, referred by a method described in Evaluation Example 2.

## Equation 1

$$\text{Rate of change in vertical relative force } (F_V) = [(\text{maximum } F_V \text{ value } (F_{VR1}) - \text{minimum value } F_V \text{ value } (F_{VR1})) / \text{minimum } F_V \text{ value } (F_{VR1})] \times 100$$

In the electrode, when the rate of change in the vertical relative force Fv measured by the SAICAS measurement is less than or equal to 300 %, the uniformity of distribution of constituent components in the electrode may be improved. In one or more embodiments, because a side reaction and an increase in internal resistance due to non-uniform (e.g., substantially non-uniform) distribution of components in the electrode active material layer are suppressed or reduced, the reversibility of the electrode reaction may be improved. Even in the case of an electrode having a high loading, the cycle characteristics of a lithium battery may be improved. In one or more embodiments, when the electrode includes the interlayer, the binding force between the electrode active material layer and the electrode current collector may be additionally strengthened, and the internal resistance of the electrode may be reduced. Accordingly, a lithium battery employing such an electrode may have improved cycle characteristics.

In the electrode, when the electrode active material layer included in the first domain is measured utilizing the SAICAS, with respect to the total depth from the surface of the electrode active material layer to the surface of the electrode current collector, a horizontal force ratio of a second horizontal force ($F_{H2}$) at a second point, which is spaced apart (e.g., or separated) by 10 % in the direction (for example, a depth direction) from the surface of the electrode current collector to the electrode active material layer, to a first horizontal force ($F_{H1}$) at a first point, which is spaced apart (or separated) by 10 % in the direction from the surface of the electrode active material layer to the electrode current collector, may be greater than or equal to 50 %. The horizontal force ratio may be, for example, about 50 % to about 100 %, about 60 % to about 100 %, about 70 % to about 100 %, about 80 % to about 100 %, or about 90 % to about 100 %. The second point, which is spaced apart by 10 % in the direction from the surface of the electrode current collector to the electrode active material layer, may correspond to, for example, a point that is spaced apart by 90 % in the direction from the surface of the electrode active material layer to the electrode current collector, with respect to the total thickness of the electrode active material layer. The horizontal force ratio may be, for example, represented by Equation 2. The SAICAS measurement method may be, for example, referred by a method described in Evaluation Example 3.

## Equation 2

$$\text{Horizontal force ratio} = [\text{second horizontal force } (F_{H2}) / \text{first horizontal force } (F_{H1})] \times 100$$

When the horizontal force ratio measured by the SAICAS measurement is greater than or equal to 50 %, the uniformity of distribution of constituent components in the electrode may be further improved. When the horizontal force of the electrode is within the ranges above, the cycle characteristics of a lithium battery employing such an electrode may be further improved.

The electrode may be, for example, a cathode. The cathode may include a cathode active material layer, and the cathode active material layer may include a cathode active material.

As a cathode active material included in the cathode active material layer, any lithium metal oxide that is commonly utilized in the art may be utilized without limitation.

The cathode active material may be, for example, at least one composite oxide of lithium and a metal including (e.g., selected from) cobalt (Co), manganese (Mn), nickel (Ni), and/or a combination thereof may be utilized, and as a specific example of the composite oxide, a compound represented by one of the following formulae may be utilized:

$Li_aA_{1-b}B_bD_2$ (where $0.90 \leq a \leq 1$ and $0 \leq b \leq 0.5$); $Li_aE_{1-b}B_bO_{2-c}D_c$ (where $0.90 \leq a \leq 1$, $0 \leq b \leq 0.5$, and $0 \leq c \leq 0.05$); $LiE_{2-b}B_bO_{4-c}D_c$ (where $0 \leq b \leq 0.5$ and $0 \leq c \leq 0.05$); $Li_aNi_{1-b-c}Co_bB_cO_\alpha$ (where $0.90 \leq a \leq 1$, $0 \leq b \leq 0.5$, $0 \leq c \leq 0.05$, and $0 < \alpha \leq 2$); $Li_aNi_{1-b-c}Co_bB_cO_{2-\alpha}F_\alpha$ (where $0.90 \leq a \leq 1$, $0 \leq b \leq 0.5$, $0 \leq c \leq 0.05$, and $0 < \alpha < 2$); $Li_aNi_{1-b-c}Co_bB_cO_{2-\alpha}F_2$ (where $0.90 \leq a \leq 1$, $0 \leq b \leq 0.5$, $0 \leq c \leq 0.05$, and $0 < \alpha < 2$); $Li_aNi_{1-b-c}Mn_bB_cO_\alpha$ (where $0.90 \leq a \leq 1$, $0 \leq b \leq 0.5$, $0 \leq c \leq 0.05$, and $0 < \alpha \leq 2$); $Li_aNi_{1-b-c}Mn_bB_cO_{2-\alpha}F_\alpha$ (where $0.90 \leq a \leq 1$, $0 \leq b \leq 0.5$, $0 \leq c \leq 0.05$, and $0 < \alpha < 2$); $Li_aNi_{1-b-c}Mn_bB_cO_{2-\alpha}F_2$ (where $0.90 \leq a \leq 1$, $0 \leq b \leq 0.5$, $0 \leq c \leq 0.05$, and $0 < \alpha < 2$); $Li_aNi_bE_cG_dO_2$ (where $0.90 \leq a \leq 1$, $0 \leq b \leq 0.9$, $0 \leq c \leq 0.5$, and $0.001 \leq d \leq 0.1$); $Li_aNi_bCo_cMn_dG_eO_2$ (where $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (where $0.90 \leq a \leq 1$ and $0.001 \leq b \leq 0.1$); $Li_aCoG_bO_2$ (where $0.90 \leq a \leq 1$ and $0.001 \leq b \leq 0.1$); $Li_aMnG_bO_2$ (where $0.90 \leq a \leq 1$ and $0.001 \leq b \leq 0.1$); $Li_aMn_2G_bO_4$ (where $0.90 \leq a \leq 1$ and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ (where $0 \leq f \leq 2$); $Li_{(3-f)}Fe_2(PO_4)_3$ (where $0 \leq f \leq 2$); and $LiFePO_4$.

In the formulae above representing the compound, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof.

A compound in which a coating layer is provided on the surface of the above-described compound may be utilized, and a mixture of the above-described compound and a compound provided with a coating layer may also be utilized. The coating layer provided on the surface of the above-described compound may include, for example, a coating element compound such as oxide of a coating element, hydroxide of a coating element, oxyhydroxide of a coating element, oxycarbonate of a coating element, or hydroxycarbonate of a coating element. The compound constituting the coating layer may be amorphous or crystalline. The coating element included in the coating layer may be Mg, Al, Co, K, Na, Ca, Si, Ti, V, Sn, Ge, Ga, B, As, Zr, or a mixture thereof. A method of forming the coating layer may be selected within a range that does not adversely affect the physical properties of the cathode active material. The coating method may be, for example, spray coating, dipping method, and/or the like. A detailed description of the coating method will not be provided because it may be well understood by those in the art.

An amount of the cathode active material included in the cathode active material layer may be, for example, about 80 wt% to about 98 wt% or about 90 wt% to about 98 wt%, based on the total weight of the cathode active material layer.

The cathode active material may be, for example, a composite cathode active material.

The composite cathode active material may include, for example: a core including a lithium transition metal oxide; and a shell arranged along a surface of the core, wherein the shell may include: at least one first metal oxide represented by formula $M_aO_b$ (where $0 < a \leq 3$, $0 < b < 4$, and when a is 1, 2, or 3, b is not an integer); and graphene. The first metal oxide may be arranged inside a graphene matrix, M may be at least one metal of (e.g., selected from) Groups 2 to 13, 15, and/or 16 of the Periodic Table of Elements, the lithium transition metal oxide may include Ni, and an amount of Ni may be greater than or equal to 80 mol% based on the total number of moles of the transition metal. On the core of the composite cathode active material, the shell including the first metal oxide and graphene may be arranged.

Graphene in the art is difficult to be coated uniformly on the core, due to aggregation. In contrast, the composite cathode active material, which uses a composite including a plurality of first metal oxides disposed within a graphene matrix, may be able to prevent or reduce aggregation of graphene, and accordingly, a substantially uniform shell may be arranged on the core. Accordingly, by effectively blocking a contact between the core and an electrolyte solution, side reactions due to the contact between the core and an electrolyte may be prevented or reduced. In one or more embodiments, when reduction of nickel ions ($Ni^{3+} \rightarrow Ni^{2+}$) by an electrolyte solution and cation mixing are suppressed or reduced, the formation of a resistance layer, such as NiO phase may be prevented or reduced. In one or more embodiments, elution of nickel ions may also be suppressed or reduced. Because the shell including graphene has flexibility, a change in volume of the composite cathode active material during charging and discharging may be easily accepted, and thus occurrence of cracks in the composite cathode active material may be suppressed or reduced. Because graphene has high electron conductivity, interfacial resistance between the composite cathode active material and the electrolyte solution may decrease. Accordingly, despite the introduction of the shell including graphene, internal resistance in a lithium battery may be maintained or reduced. In one or more embodiments, because the first metal oxide has voltage resistance, the deterioration of a lithium transition metal oxide included in the core during charging and discharging at a high voltage may be prevented or reduced. Consequently, the cycle characteristics and high-temperature stability of a lithium battery including the composite cathode active material may be improved. The shell may include, for example, one type or kind of first metal oxide or two or more types (kinds) of different first metal oxides. In one or more embodiments, in the composite cathode active material, the lithium transition metal oxide may have a nickel amount of greater than or equal to 80 mol% based on the number of moles of the total transition metals, and the shell including the first metal oxide and graphene may be arranged on the core, so as to provide high discharge capacity and the improved cycle characteristics at the same time. Accordingly, the composite cathode active material having a high nickel content (e.g., amount) of greater than or equal to 80 mol% may provide a capacity improved over a composite cathode active material having a relatively low nickel content (e.g., amount) while still providing excellent or suitable lifespan characteristics. The metal included in the first metal oxide may be, for example, at least one of (e.g., one selected from) Al, Nb, Mg, Sc, Ti, Zr, V, W, Mn, Fe, Co, Pd, Cu, Ag, Zn, Sb, and/or Se.

The first metal oxide may be, for example, one or more of (e.g., one or more selected from) $Al_2O_z$ (where $0<z<3$), $NbO_x$ (where $0<x<2.5$), $MgO_x$ (where $0<x<1$), $Sc_2O_z$ (where $0<z<3$), $TiO_y$ (where $0<y<2$), $ZrO_y$ (where $0<y<2$), $V_2O_z$ (where $0<z<3$), $WO_y$ (where $0<y<2$), $MnO_y$ (where $0<y<2$), $Fe_2O_z$ (where $0<z<3$), $Co_3O_w$ (where $0<w<4$), $PdO_x$ (where $0<x<1$), $CuO_x$ (where $0<x<1$), $AgO_x$ (where $0<x<1$), $ZnO_x$ (where $0<x<1$), $Sb_2O_z$ (where $0<z<3$), and $SeO_y$ (where $0<y<2$). When the first metal oxide is arranged within the graphene matrix, uniformity of the shell arranged on the core may be improved, and voltage resistance of the composite cathode active material may be further improved. For example, the shell may include $Al_2O_x$ (where $0<x<3$) as the first metal oxide. The shell may further include at least one second metal oxide represented by formula $M_aO_c$ (where $0<a\leq3$, $0<c\leq4$, and when a is 1, 2, or 3, c is an integer). M may be at least one metal of (e.g., selected from) Groups 2 to 13, 15, and/or 16 of the Periodic Table of Elements. For example, the second metal oxide may include the same metal as the metal included in the first metal oxide, and c/a, which is a ratio of c to a in the second metal oxide, may be greater than b/a, which is a ratio of b to a in the first metal oxide. For example, $c/a > b/a$. The second metal oxide may be, for example, selected from $Al_2O_3$, $NbO$, $NbO_2$, $Nb_2O_5$, $MgO$, $Sc_2O_3$, $TiO_2$, $ZrO_2$, $V_2O_3$, $WO_2$, $MnO_2$, $Fe_2O_3$, $Co_3O_4$, $PdO$, $CuO$, $AgO$, $ZnO$, $Sb_2O_3$, and $SeO_2$. The first metal oxide may be a reduction product of the second metal oxide. The first metal oxide may be obtained from the reduction of a part or all of the second metal oxide. Accordingly, the first metal oxide may have a lower oxygen content (e.g., amount) and a higher metal oxidation number that those of the second metal oxide. For example, the shell may include $Al_2O_x$ (where $0<x<3$) as the first metal oxide and $Al_2O_3$ as the second metal oxide. In the composite cathode active material, for example, graphene included in the shell and the lithium transition metal oxide included in the core may be chemically bound via a chemical bond. A carbon atom (C) of graphene included in the shell and a transition metal (Me) of the lithium transition metal oxide may be, for example, chemically bound via an oxygen-mediated CO-Me bond (e.g., C-O-Ni bond). When graphene included in the shell and the lithium transition metal oxide included in the core are chemically bound via a chemical bond, the core and the shell may form a complex. Therefore, the complex may be distinguished from a simple physical mixture of graphene and the lithium transition metal oxide. In one or more embodiments, graphene and the first metal oxide included in the shell may also be, for example, chemically bound via a chemical bond. Here, the chemical bond may be, for example, a covalent bond or an ionic bond. The covalent bond may be, for example, a bond that includes at least one of an ester group, an ether group, a carbonyl group, an amide group, a carbonate anhydride group, and an acid anhydride group. The ionic bond may be, for example, a bond that includes a carboxylic acid ion, an ammonium ion, an acyl cation group, and/or the like. A thickness of the shell may be, for example, about 1 nm to about 5 $\mu$m, about 1 nm to about 1 $\mu$m, about 1 nm to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, about 1 nm to about 20 nm, or about 1 nm to about 10 nm. When the thickness of the shell is within the ranges above, an increase in internal resistance of a lithium battery including the composite cathode active material may be suppressed or reduced.

An amount of the complex included in the composite cathode active material may be less than or equal to 3 wt%, less than or equal to 2 wt%, less than or equal to 1 wt%, less than or equal to 0.5 wt%, or less than or equal to 0.2 wt%, based on the total weight of the composite cathode active material. The amount of the complex may be about 0.01 wt% to about 3 wt%, about 0.01 wt% to about 1 wt%, about 0.01 wt% to about 0.7 wt%, about 0.01 wt% to about 0.6 wt%, about 0.01 wt% to about 0.5 wt%, about 0.01 wt% to about 0.2 wt%, about 0.01 wt% to about 0.1 wt%, or about 0.03 wt% to about 0.07 wt%, based on the total weight of the composite cathode active material. When the amount of the complex included in the composite cathode active material is within the ranges above, the cycle characteristics of a lithium battery including the composite cathode active material may be further improved. An average particle diameter of one or more selected from the first metal oxide and the second metal oxide included in the complex may be about 1 nm to about 1 $\mu$m, about 1 nm to about 500 nm, about 1 nm to about 200 nm, about 1 nm to about 100 nm, about 1 nm to about 70 nm, about 1 nm to about 50 nm, about 1 nm to about 30 nm, about 3 nm to about 30 nm, about 3 nm to about 25 nm, about 5 nm to about 25 nm, about 5 nm to about 20 nm, or about 7 nm to about 20 nm. When the particle diameter of the first metal oxide and/or the second metal oxide is within these nanometer ranges above, the first metal oxide and/or the second metal oxide may be more uniformly distributed in the graphene matrix of the composite. Therefore, such a composite may be uniformly coated on the core without aggregation, and form a shell. In one or more embodiments, when the particle diameter of the first metal oxide and/or the second metal oxide is within the ranges above, the first metal oxide and/or the second metal oxide may be more uniformly arranged on the core. Therefore, by uniformly arranging the first metal oxide and/or the second metal oxide on the core, the voltage resistance characteristics may be more effectively exhibited. The average particle diameter of the first metal oxide and the second metal oxide may be, for example, measured by a measurement apparatus utilizing a laser diffraction method or a dynamic light scattering method. The average diameter may be, for example, measured utilizing a laser scattering particle size distribution meter (for example, LA-920 manufactured by Horiba Corporation), and refers to the value of the particle size corresponding to 50% from the smallest particle when the total number of particles is 100% in the distribution curve accumulated in the order of the smallest particle size to the largest particle size..

The core included in the composite cathode active material may include, for example, a lithium transition metal oxide represented by Formula 1:

$$\text{Formula 1} \qquad Li_aNi_xCo_yM_zO_{2-b}A_b$$

wherein, in Formula 1, $1.0 \leq a \leq 1.2$, $0 \leq b \leq 0.2$, $0.8 \leq x < 1$, $0 \leq y \leq 0.3$, $0 < z \leq 0.3$, and $x+y+z=1$, M may be at least one of (e.g., one selected from) manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), and/or boron (B), and A may be F, S, Cl, Br, or a combination thereof.

The core included in the composite cathode active material may include, for example, a lithium transition metal oxide represented by Formulae 2 to 4:

$$\text{Formula 2} \qquad LiNi_xCo_yMn_zO_2$$

$$\text{Formula 3} \qquad LiNi_xCo_yAl_zO_2$$

wherein, in Formulae 2 to 4, $0.8 \leq x \leq 0.95$, $0 \leq y \leq 0.2$, $0 < z \leq 0.2$, and $x+y+z=1$, and

$$\text{Formula 4} \qquad LiNi_xCo_yAl_vMn_wO_2$$

wherein, in Formula 4, $0.8 \leq x \leq 0.95$, $0 \leq y \leq 0.2$, $0 < v \leq 0.2$, $0 < w \leq 0.2$, and $x+y+v+w=1$.

The core included in the composite cathode active material may include, for example, a lithium transition metal oxide represented by Formula 5:

$$\text{Formula 5} \qquad Li_aNi_xM_zO_{2-b}A_b$$

wherein, in Formula 5, $1.0 \leq a \leq 1.2$, $0 \leq b \leq 0.2$, $0.8 \leq x < 1$, $0 < z \leq 0.2$, and $x+z=1$, M may be at least one of (e.g., one selected from) Mn, Nb, V, Mg, Ga, Si, W, Mo, Fe, Cr, Cu, Zn, Ti, Al, and/or B, and A may be F, S, Cl, Br, or a combination thereof. In Formula 5, for example, $1.0 \leq a \leq 1.2$, $0 \leq b \leq 0.2$, $0.8 \leq x \leq 0.95$, $0.05 \leq z \leq 0.2$, and $x+z=1$.

The electrode may be, for example, an anode. The anode may include an anode active material layer, and the anode active material layer may include an anode active material.

For utilization as the anode active material, any material available as an anode active material of a lithium battery in the art may be utilized. For example, the anode active material may include at least one of (e.g., one selected from) lithium metal, a metal alloyable with lithium, a transition metal oxide, a non-transition metal oxide, and/or a carbon-based material. Examples of the metal alloyable with lithium include Si, Sn, Al, Ge, Pb, Bi, Sb, a Si-Y alloy (where Y is an alkali metal, an alkaline earth metal, a Group 13 element, a Group 14 element, a transition metal, a rare earth element, or a combination thereof, and Y is not Si), a Sn-Y alloy (where Y is an alkali metal, an alkaline earth-metal, a Group 13 element, a Group 14 element, a transition metal, a rare earth element, or a combination thereof, and Y is not Sn), and/or the like. Element Y may be, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof. The transition metal oxide may be, for example, a lithium titanium oxide, a vanadium oxide, a lithium vanadium oxide, and/or the like. The non-transition metal oxide may be, for example, $SnO_2$, SiOx (where $0 < x < 2$), and/or the like. The carbon-based material may be, for example, crystalline carbon, amorphous carbon, or a mixture thereof. The crystalline carbon may be, for example, amorphous, plate-like, flake-like, spherical, or fibrous graphite, such as natural graphite or artificial graphite. The amorphous carbon may be, for example, soft carbon (carbon sintered at a low temperature) or hard carbon, mesophase pitch carbide, sintered coke, and/or the like.

An amount of anode active material included in the anode active material layer may be, for example, about 80 wt% to about 98 wt% or from about 90 wt% to about 98 wt%, based on the total weight of the anode active material layer. In one embodiment of the present invention, the electrode current collector may include, for example, a base film and a metal layer disposed on one or both sides of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or combinations thereof. By including the thermoplastic polymer in the base film, when a short circuit occurs, the base film is liquefied and a rapid increase in current can be suppressed. The base film may be an insulator, for example. The metal layer may include, for example, indium (In), copper (Cu), magnesium (Mg), stainless steel, titanium (Ti), iron (Fe), cobalt (Co), nickel (Ni), zinc (Zn), aluminum (Al) , Germanium (Ge), lithium (Li), or an alloy thereof. The metal layer may act as an electrochemical fuse and may be cut off over an overcurrent to perform a short circuit prevention function. A limiting current and a maximum current for the metal layer can be adjusted by adjusting the thickness of the metal layer. The metal layer may be plated or deposited on the base film. When the thickness of the metal layer is reduced, the limit current and/or the maximum current of the electrode current collector may be reduced, and thus stability of the lithium battery during a short circuit may be improved. A lead tab may be added on the metal layer for external connection. The lead tab may be welded to the metal layer or the metal layer/base film laminate by ultrasonic welding, laser welding, spot welding, or the like. The metal layer may be electrically connected to the lead tab while at least partially melting the base film and/or the metal layer during welding. To make welding between the metal layer and the lead tab more robust, a metal chip may be added between the metal layer and the lead tab. The metal chip may be a flake of the same material as the metal of the metal layer. The metal chip may be, for example, metal foil or metal mesh. The metal chip may be, for example, aluminum foil, copper foil, or SUS foil. The lead tab may be welded to the metal chip/metal layer laminate or the metal chip/metal layer/base film laminate by welding the lead tab after disposing the metal chip on the metal layer. During welding, the metal layer or the metal layer/metal chip stack may be electrically connected to the lead tab while the base film, the metal layer, and/or the metal chip may be at least partially melted. A metal chip and/or lead tab may be added to a portion on the metal layer. The thickness of the base film may be, for example, 1 to 50 $\mu$m, 1.5 to 50 $\mu$m, 1.5 to 40 $\mu$m, or 1 to 30 $\mu$m. When the base film has a thickness within this range, a weight of an electrode assembly may be more effectively reduced. The melting point of the base film may be, for example, 100 to 300 °C, 100 to 250 °C or less, or 100 to 200 °C. Since the base film has a melting point within this range, the base film may be melted and easily coupled to the lead tab in the process of welding the lead tab. Surface treatment such as corona treatment may be performed on the base film in order to improve adhesion between the base film and the metal layer. The thickness of the metal layer may be, for example, 0.01 to 3 $\mu$m, 0.1 to 3 $\mu$m, 0.1 to 2 $\mu$m, or 0.1 $\mu$m to 0.1 $\mu$m. When the metal layer has a thickness within this range, it is possible to secure stability of the electrode assembly while maintaining conductivity. The thickness of the metal chip may be, for example, 2 to 10 $\mu$m, 2 to 7 $\mu$m, or 4 to 6 $\mu$m. When the metal chip has a thickness within this range, connection between the metal layer and the lead tab may be more easily performed. Since the electrode current collector have such a structure, the weight of the electrode can be reduced and, as a result, the energy density of lithium battery can be improved. In one embodiment of the present invention, the electrode current collector may include, for example, a cathode current collector and/or an anode current collector.

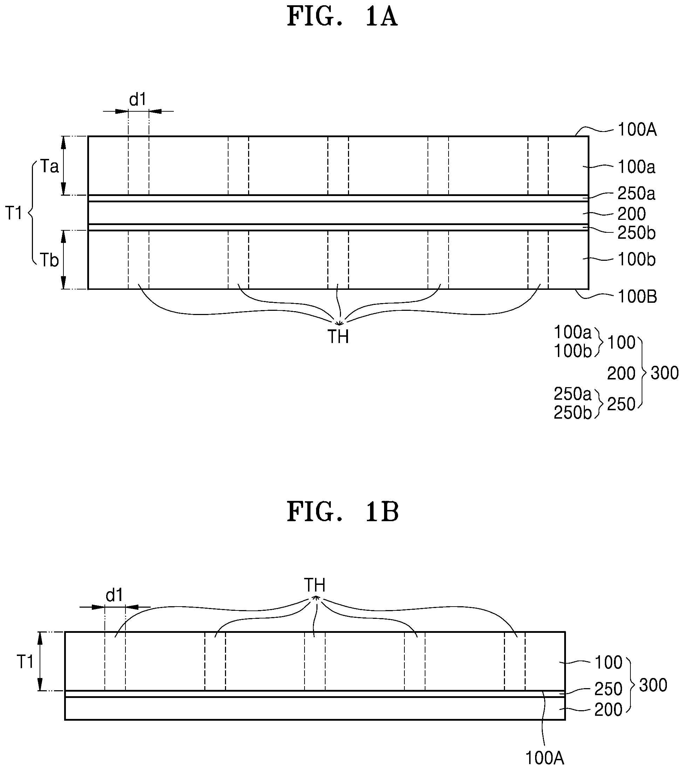

Referring to FIG. 1A, an electrode 300 disclosed herein includes: an electrode active material layer 100 including an electrode active material, a binder, and a plurality of through-holes TH; an electrode current collector 200 arranged between both surfaces 100A and 100B of the electrode active material layer 100; and an interlayer 250 (e.g., 250a, and/or 250b) arranged between the electrode active material layer 100 and the electrode current collector 200, wherein the electrode active material layer 100 is a self-standing film, and includes the plurality of through-holes TH extended to the interlayer 250.

The electrode active material layer 100 may include the plurality of through-holes TH, each having a diameter (e.g., an arbitrary diameter) d1. In the electrode 300 of FIG. 1A, a thickness T1 of the electrode active material layer 100 included in the electrode 300 is the sum of thicknesses (Ta and Tb) of electrode active material layers 100a and 100b, respectively, arranged on both surfaces of the electrode current collector 200. A depth of each of the plurality of through-holes TH may be, for example, substantially the same as the thickness T1 of the electrode active material layer 100.

The electrode active material layer 100 may include the plurality of through-holes TH, and an electrolyte, i.e., lithium ions, may be delivered to the inside of the electrode active material layer 100 through the plurality of through-holes TH. Accordingly, the electrode active material layer 100 may be a region including ion conduction channels. Accordingly, the electrode 300 including the plurality of through-holes TH may be an electrode including ion conduction channels.

Referring to FIG. 1B, the electrode 300 disclosed herein includes: the electrode active material layer 100 including the electrode active material, the binder, and the plurality of through-holes TH; the electrode current collector 200 arranged on one surface 100A of the electrode active material layer 100; and the interlayer 250 arranged between the electrode active material layer 100 and the electrode current collector 200, wherein the electrode active material layer 100 is a self-standing film, and includes the plurality of through-holes TH extended to the interlayer 250.

The electrode active material layer 100 may include the plurality of through-holes TH, each having a diameter (e.g., an arbitrary diameter) d1. In the electrode 300 of FIG. 1B, the electrode 300 may include the electrode active material layer 100 having a thickness (e.g., an arbitrary thickness) T1. A depth of each of the plurality of through-holes TH may be, for example, substantially the same as the thickness T1 of the electrode active material layer 100.

The electrode active material layer 100 may include the plurality of through-holes TH, and an electrolyte, i.e., lithium ions, may be delivered to the inside of the electrode active material layer 100 through the plurality of through-holes TH. Accordingly, the electrode active material layer 100 may be a region including ion conduction channels. Accordingly, the electrode 300 including the plurality of through-holes TH may be an electrode including ion conduction channels.

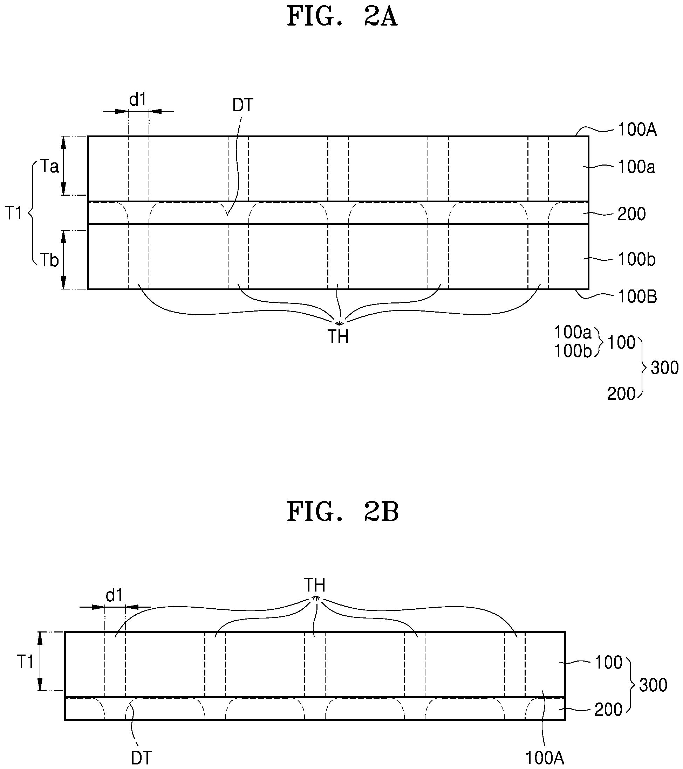

Referring to FIGS. 2A and 2B, the electrode 300 in the art includes: the electrode active material layer 100 including an electrode active material, a binder, and a plurality of through-holes TH; and the electrode current collector 200 arranged between both surfaces 100A and 100B or on one surface 100A of the electrode active material layer 100. Because the electrode active material layer 100 is arranged on the electrode current collector 200 in the form of an electrode slurry, the electrode active material layer 100 is not a self-standing film. Although the electrode active material layer 100 includes through-holes TH extended to the electrode current collector 200, the electrode active material layer 100 may have defects (DT) such as burrs and dents extended from one end of the through-hole TH during the formation of the through-hole. As the electrode 300 in the art may have such defects DT, the electrode 300 may be deteriorated by local side reactions in these defects DT between an electrolyte and the electrode active material layer 100 or an electrolyte and the electrode current collector 200. Accordingly, the cycle characteristics, such as lifespan characteristics, of a battery employing the electrode 300 in the art may be degraded.

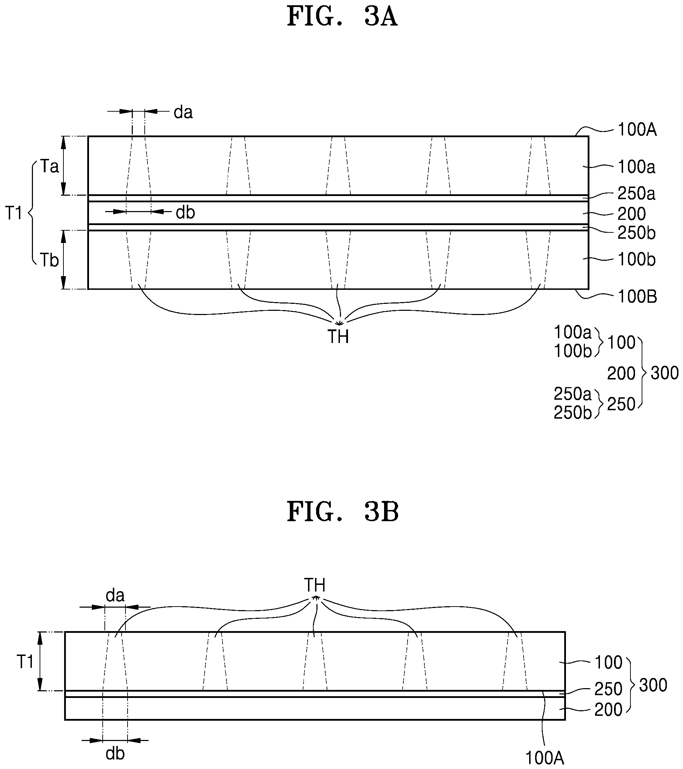

Referring to FIGS. 3A and 3B, the electrode 300 disclosed herein includes: the electrode active material layer 100 including an electrode active material, a binder, and a plurality of through-holes TH; the electrode current collector 200 arranged between both surfaces 100A and 100B of the electrode active material layer 100; and the interlayer 250 (e.g., 250a, and/or 250b) arranged between the electrode active material layer 100 and the electrode current collector 200, wherein the electrode active material layer 100 is a self-standing film, and includes the plurality of through-holes TH extended to the interlayer 250, and a diameter $d_b$ of one end of each of the plurality of through-holes TH in contact with the interlayer 250 is greater than a diameter $d_a$ of the other end of each of the plurality of through-holes TH exposed from the surface of the electrode active material layer 100. Because the diameter $d_b$ of the one end of each of the plurality of through-holes TH in contact with the interlayer 250 becomes (is) greater than the diameter $d_a$ of the other end of each of the plurality of through-holes TH exposed to the surface of the electrode active material layer 100, an electrolyte and the electrode active material layer 100 may have a larger contact area inside the electrode active material layer 100, and thus an imbalance in current density between the surface of the electrode active material layer 100 and the inside of the electrode active material layer 100 may be effectively prevented or reduced. The ratio of $d_b$ to $d_a$, i.e., $d_a:d_b$, may be greater than 1:1. For example, $d_a:d_b$ may be 1: 1.01 to 2, 1:1.01 to 1.5, or 1:1.01 to 1.1.

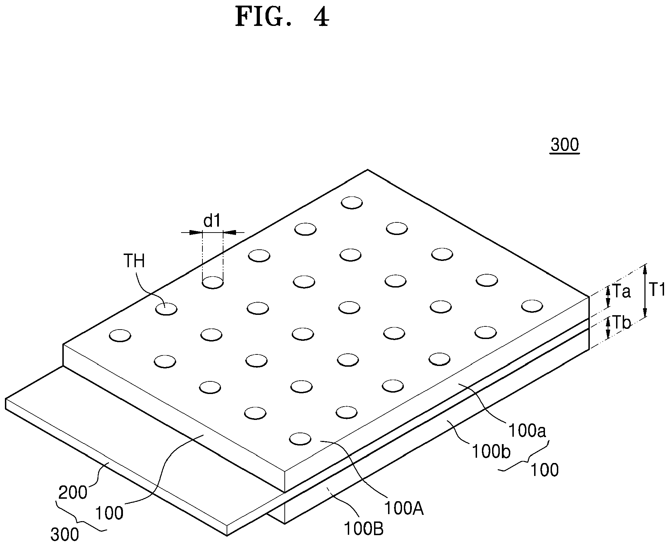

Referring to FIG. 4, the electrode 300 disclosed herein includes: the electrode active material layer 100 including an electrode active material and a binder; and the electrode current collector 200 arranged between both surfaces 100A and 100B of the electrode active material layer 100, wherein the electrode active material layer 100 includes a plurality of through-holes TH. The electrode active material layer 100 may include a plurality of through-holes TH each having a diameter (e.g., an arbitrary diameter) d1. The thickness T1 of the electrode active material layer 100 included in the electrode 300 is the sum of the thicknesses Ta and Tb of the electrode active material layers 100a and 100b, respectively, arranged on both surfaces of the electrode current collector 200. The cross-section of FIG. 4 corresponds to FIG. 1A.

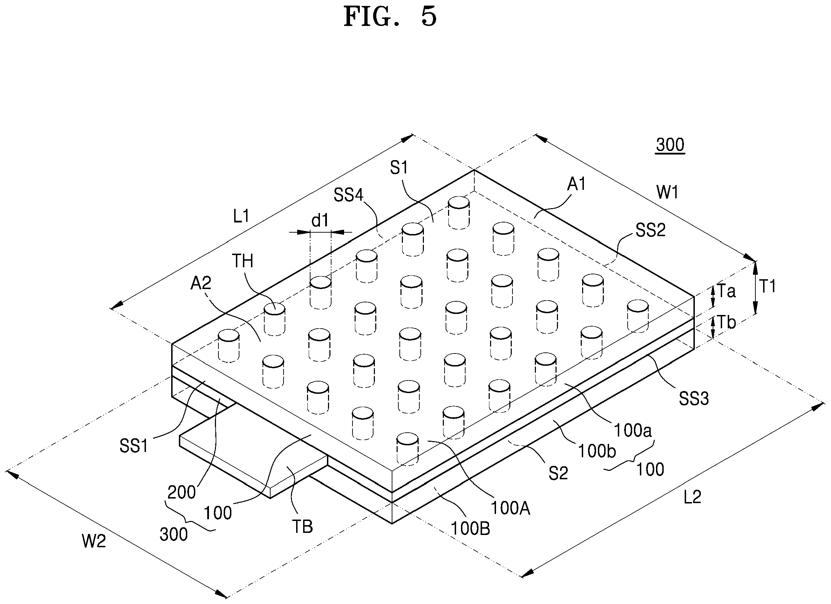

Referring to FIG. 5, in the electrode 300 disclosed herein, the electrode active material layer 100 includes: a first surface S1 and a second surface S2 opposite to the first surface S1; a first side surface SS1 and a second side surface SS2 opposite to the first side surface SS1, which are connected to the lengthwise ends of the first surface S1 and the second surface S2; and a third side surface SS3 and a fourth side surface SS4 opposite to the third side surface, which are connected to the widthwise ends of the first surface S1 and the second surface S2. The electrode active material layer 100 may include a plurality of through-holes TH each having a diameter (e.g., an arbitrary diameter) d1. The thickness T1 of the electrode active material layer 100 included in the electrode 300 is the sum of the thicknesses Ta and Tb of the electrode active material layers 100a and 100b, respectively, arranged on both surfaces of the electrode current collector 200.

Referring to FIG. 5, the electrode active material layer 100 has a first area A1 defined by a lengthwise first distance L1 and a widthwise first distance W1, the electrode current collector 200 is arranged between the first surface S1 and the second surface S2, and the electrode current collector 200 has a second area A2 defined by a lengthwise second distance L2 and a widthwise second distance W2, wherein the second surface A2 of electrode current collector 200 is substantially the same as the first area A1 of the electrode active material layer 100. For example, the second area A2 of the electrode current collector 200 may be 100 % of the first area A1 of the electrode active material layer 100.

Referring to FIG. 5, the electrode current collector 200 further includes a tab TB extending to the outside of the electrode active material layer 100 through less than or equal to two side surfaces selected from the first side surface SS1, the second side surface SS2, the third side surface SS3, and the fourth side surface SS4. For example, the tab TB may extend to the outside of the electrode active material layer 100 through the first side surface SS1 and/or the second side surface SS2. In one or more embodiments, the tab TB may extend to the outside of the electrode active material layer 100 through the third side surface SS3 and/or the fourth side surface SS4. As the tab TB extends to the outside of the electrode active material layer 100 through one side or two opposite sides, a short circuit by a plurality of adjacent tabs TB may be prevented or reduced.

In the electrode disclosed herein, for example, the electrode current collector may be arranged only on a portion of one surface or a portion between both surfaces of the electrode active material layer. When the electrode current collector is arranged on a portion of one surface or a portion between both surfaces of the electrode active material layer, the volume occupied by the electrode current collector in the electrode may decrease. Accordingly, the energy density of a lithium battery including the electrode having such a decreased volume of the electrode current collector may be improved. Accordingly, a lithium battery providing an improved output may be provided.

The electrode may include: a first domain including the electrode active material layer, and the electrode current collector that is arranged on one surface or between both surfaces of the electrode active material layer; and a second domain including the electrode active material layer and free of the electrode current collector on one surface or between both surfaces of the electrode active material layer. In one or more embodiments, the first domain and the second domain may each include a plurality of through-holes.

When the second domain that is free of the electrode current collector on one surface or between both surfaces of the electrode active material layer includes a plurality of through-holes, flexibility of the electrode may be increased, and accordingly, high-rate capability may be further improved. When the plurality of through-holes are additionally arranged in the first domain that includes the current collector on one surface or between both (e.g., simultaneously) surfaces of the electrode active material layer, the high-rate capability of a lithium battery may be additionally improved.

The electrode in which the electrode current collector is arranged only on a portion of one surface or a portion between both surfaces of the electrode active material layer may be, for example, a stretchable electrode. The stretchable electrode may be stretched in one or more directions selected from a lengthwise direction and a widthwise direction. The stretchable electrode may be, for example, stretched by greater than or equal to 5 %, greater than or equal to 10 %, greater than or equal to 15 %, greater than or equal to 20 %, greater than or equal to 30 %, greater than or equal to 40 %, or greater than or equal to 50 %, in a lengthwise direction of the electrode. The stretchable electrode may be, for example, stretched by about 5 % to about 100 %, about 10 % to about 100 %, about 15 % to about 100 %, about 20 % to about 100 %, about 30 % to about 100 %, about 40 % to about 100 %, or about 50 % to about 100 %, in a lengthwise direction of the electrode. The stretchable electrode may be, for example, stretched by greater than or equal to 5 %, greater than or equal to 10 %, greater than or equal to 15 %, greater than or equal to 20 %, greater than or equal to 30 %, greater than or equal to 40 %, or greater than or equal to 50 %, in a widthwise direction of the electrode. The stretchable electrode may be, for example, stretched by about 5 % to about 100 %, about 10 % to about 100 %, about 15 % to about 100 %, about 20 % to about 100 %, about 30 % to about 100 %, about 40 % to about 100 %, or about 50 % to about 100 %, in a widthwise direction of the electrode. The stretchable electrode may be, for example, recovered to the initial length without occurrence of cracks and/or the like in the electrode after being stretched, and even when this cycle is repeated multiple times, cracks and/or the like may not occur in the electrode. For example, when the stretchable electrode includes the electrode current collector only in the first domain and does not include the electrode current collector in the second domain, the second domain may be easily stretched. In one or more embodiments, because the electrode current collector is arranged only on a portion of the electrode, separation of the electrode current collector from the electrode active material layer may be minimized or reduced even when a plurality of electrodes are wound up or bent, and in this regard, a lithium battery of one or more suitable forms may be easily implemented.

Referring to FIG. 6A, the electrode 300 disclosed herein includes: the electrode active material layer 100 including an electrode active material and a binder; and the electrode current collector 200 arranged on a portion between both surfaces 100A and 100B of the electrode active material layer 100, wherein the electrode active material layer 100 includes a plurality of through-holes TH. A first domain D1 may be a domain including the electrode active material layer 100 and the electrode current collector 200 that is arranged between both surfaces 100A and 100B of the electrode active material layer 100. For example, the first domain D1 may be a domain that includes the electrode current collector 200 and the electrode active material layer 100 that is arranged on both surfaces of the electrode current collector in a thickness direction of the electrode 300. A second domain D2 may be a domain including the electrode active material layer 100 and free of the electrode current collector 200 that is arranged between both surfaces of the electrode active material layer 100. For example, the second domain D2 may be the remaining domain of the electrode active material layer 100, except for the first domain D1. In FIG. 6A, the division between the first domain D1 and the second domain D2 may be, for example, formed or defined by a virtual dotted line arranged along a thickness direction of the electrode 300. The first domain D1 and the second domain D2 may each include a plurality of through-holes TH each having a diameter (e.g., an arbitrary diameter) d1. The first domain D1 and the second domain D2 that are included in the electrode 300 may have substantially the same thickness T1. The first domain D1 and the second domain D2 may each include a plurality of through-holes, and an electrolyte, that is, lithium ions, may be delivered through the plurality of through-holes. Accordingly, the first domain D1 and the second domain D2 may each be a domain including ion conduction channels. Accordingly, the electrode 300 including the first domain D1 and the second domain D2 may be an electrode that includes ion conduction channels.

Referring to FIG. 6B, the electrode 300 disclosed herein includes: the electrode active material layer 100 including an electrode active material and a binder; and the electrode current collector 200 arranged on a portion of one surface of the electrode active material layer 100, wherein the electrode active material layer 100 includes a plurality of through-holes TH. A first domain D1 may be a domain including the electrode active material layer 100 and the electrode current collector 200 that is arranged on one surface of the electrode active material layer 100. For example, the first domain D1 may be a domain that includes the electrode current collector 200 and the electrode active material layer 100 that is arranged on one surface of the electrode current collector in a thickness direction of the electrode 300. A second domain D2 may be a domain including the electrode active material layer 100 and free of the electrode current collector 200 that is arranged on one surface of the electrode active material layer 100. For example, the second domain D2 may be the remaining domain of the electrode active material layer 100, except for the first domain D1. In FIG. 6B, the division between the first domain D1 and the second domain D2 may be, for example, formed by a virtual dotted line arranged along a thickness direction of the electrode 300. The first domain D1 and the second domain D2 may each include a plurality of through-holes TH each having a diameter (e.g., an arbitrary diameter) d1. The first domain D1 and the second domain D2 that are included in the electrode 300 may have substantially the same thickness T1.

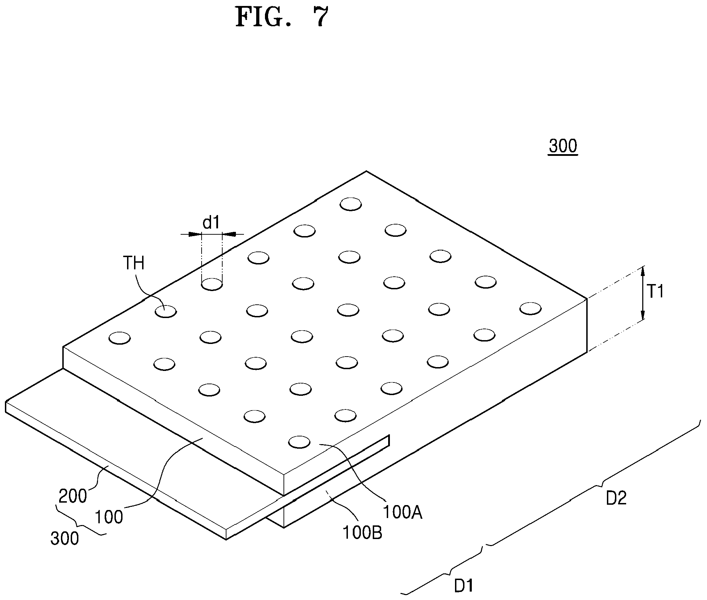

Referring to FIG. 7 the electrode 300 disclosed herein includes: the electrode active material layer 100 including an electrode active material and a binder; and the electrode current collector 200 arranged on a portion between both surfaces 100A and 100B of the electrode active material layer 100, wherein the electrode active material layer 100 includes a plurality of through-holes TH. A first domain D1 may be a domain including the electrode active material layer 100 and the electrode current collector 200 that is arranged between both surfaces of the electrode active material layer 100. For example, the first domain D1 may be a domain that includes the electrode current collector 200 and the electrode active material layer 100 that is arranged on both surfaces of the electrode current collector in a thickness direction of the electrode 300. A second domain D2 may be a domain including the electrode active material layer 100 and free of the electrode current collector 200 that is arranged between both surfaces of the electrode active material layer 100. For example, the second domain D2 may be the remaining domain of the electrode active material layer 100, except for the first domain D1. The first domain D1 and the second domain D2 may each include a plurality of through-holes TH each having a diameter (e.g., an arbitrary diameter) d1. The first domain D1 and the second domain D2 that are included in the electrode 300 may have substantially the same thickness T1. The cross-section of FIG. 7 corresponds to FIG. 6A.

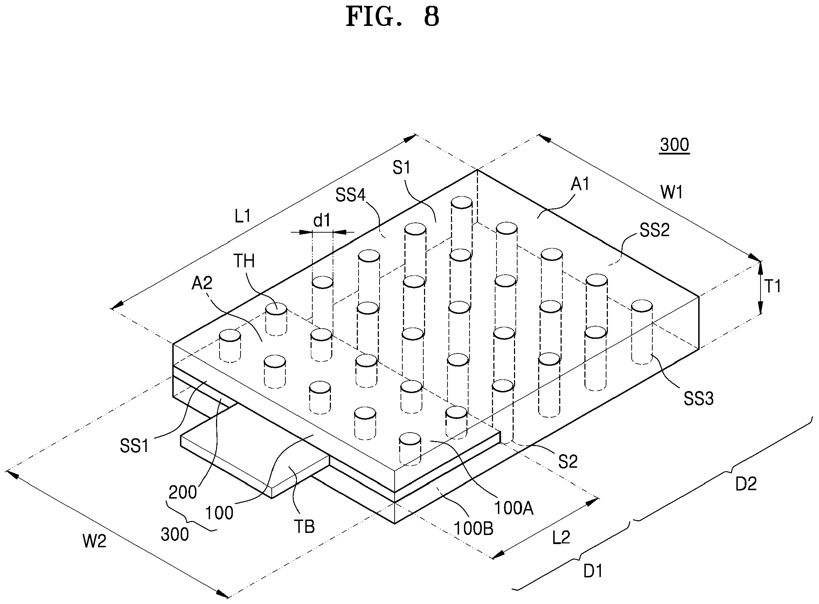

Referring to FIG. 8, in the electrode 300 disclosed herein, the electrode active material layer 100 includes: the first surface S1 and the second surface S2 opposite to the first surface S1; the first side surface SS1 and the second side surface SS2 opposite to the first side surface SS1, which are connected to the lengthwise ends of the first surface S1 and the second surface S2; and the third side surface SS3 and the fourth side surface SS4 opposite to the third side surface SS3, which are connected to the widthwise ends of the first surface S1 and the second surface S2. A first domain D1 may be a domain defined by the first surface S1, the second surface S2, the third side surface SS3, and the fourth side surface SS4 and including the electrode current collector 200 that is arranged between the first surface S1 and the second surface S2. A second domain D2 may be a domain defined by the first surface S1, the second surface S2, the third side surface SS3, and the fourth side surface SS4 and free of the electrode current collector 200 that is arranged between the first surface S1 and the second surface S2. The first domain D1 and the second domain D2 may each include a plurality of through-holes TH each having a diameter (e.g., an arbitrary diameter) d1. The first domain D1 and the second domain D2 that are included in the electrode 300 may have substantially the same thickness T1.

Referring to FIG. 8, the electrode active material layer 100 has a first area A1 defined by a lengthwise first distance L1 and a widthwise first distance W1, the electrode current collector 200 is arranged between the first surface S1 and the second surface S2, and the electrode current collector 200 has a second area A2 defined by a lengthwise second distance L2 and a widthwise second distance W2, wherein the second area A2 of electrode current collector 200 is less than or equal to 90 % of the first area A1 of the electrode active material layer 100. For example, the second area A2 of the electrode current collector 200 may be about 1 % to about 90 %, about 5 % to about 80 %, about 10 % to about 70 %, about 10 % to about 60 %, about 10 % to about 50 %, about 10 % to about 40 %, about 10 % to about 30 %, or about 10 % to about 20 %, of the first area A1 of the electrode active material layer 100. When the area of the electrode current collector 200 is smaller than that of the electrode active material layer 100 in the electrode 300, the energy density of a lithium battery employing the electrode 300 may be further improved.

Referring to FIG. 8, the lengthwise second distance L2 of the electrode current collector 200 may be less than or equal to 90 %, less than or equal to 80 %, less than or equal to 70 %, less than or equal to 60 %, less than or equal to 50 %, less than or equal to 40 %, less than or equal to 30 %, or less than or equal to 20 %, of the lengthwise first distance L1 of the electrode active material layer 100. For example, the lengthwise second distance L2 of the electrode current collector 200 may be about 1 % to about 90 %, about 5 % to about 80 %, about 10 % to about 70 %, about 10 % to about 60 %, about 10 % to about 50 %, about 10 % to about 40 %, about 10 % to about 30 %, or about 10 % to about 20 %, of the lengthwise first distance L1 of the electrode active material layer 100. In one or more embodiments, the widthwise second distance W2 of the electrode current collector 200 may be less than or equal to 90 %, less than or equal to 80 %, less than or equal to 70 %, less than or equal to 60 %, less than or equal to 50 %, less than or equal to 40 %, less than or equal to 30 %, or less than or equal to 20 %, of the widthwise first distance W1 of the electrode active material layer 100. For example, the widthwise second distance W2 of the electrode current collector 200 may be about 1 % to about 100 %, about 5 % to about 90 %, about 10 % to about 80 %, about 10 % to about 70 %, about 10 % to about 60 %, about 10 % to about 50 %, about 10 % to about 40 %, about 10 % to about 30 %, or about 10 % to about 20 %, of the widthwise first distance W1 of the electrode active material layer 100. For example, the lengthwise second distance L2 of the electrode current collector 200 may be less than or equal to 90 %, or less than or equal to 50 %, of the lengthwise first distance L1 of the electrode active material layer 100, and the widthwise second distance W2 of the electrode current collector 200 may be less than or equal to 90 % or less than or equal to 50 % of the widthwise first distance W1 of the electrode active material layer 100. When the electrode current collector 200 has such a size, the energy density of a lithium battery employing the electrode 300 may be further improved.

Referring to FIG. 8, the electrode current collector 200 is exposed to less than or equal to 3 surfaces selected from the first side surface SS1, the second side surface SS2, the third side surface SS3, and the fourth side surface SS4 included in the electrode active material layer 100. When the area of the electrode current collector 200 is smaller than that of the electrode active material layer 100, the electrode current collector 200 may be exposed to some of the side surfaces, for example, three, two, or one side surface of (e.g., included) in the electrode active material layer 100. As the number of the side surfaces of the electrode active material layer 100 on which the electrode current collector 200 is exposed decreases, the possibility of a short circuit through the side surfaces of the electrode active material layer 100 is reduced, and accordingly, the safety of a lithium battery employing the electrode 300 may be improved.

Referring to FIG. 8, the electrode current collector 200 further includes a tab TB extending to the outside of the electrode active material layer 100 through less than or equal to two side surfaces selected from the first side surface SS1, the second side surface SS2, the third side surface SS3, and the fourth side surface SS4. For example, the tab TB may extend to the outside of the electrode active material layer 100 through the first side surface SS1 and/or the second side surface SS2. In one or more embodiments, the tab TB may extend to the outside of the electrode active material layer 100 through the third side surface SS3 and/or the fourth side surface SS4. As the tab TB extends to the outside of the electrode active material layer 100 through one side or two opposite sides, a short circuit by a plurality of adjacent tabs TB may be prevented or reduced.

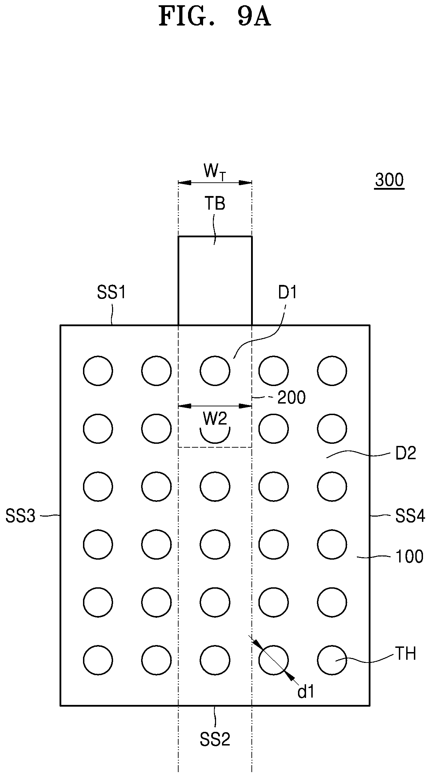

Referring to FIGS. 9A to 9F, in the electrode 300 disclosed herein, the electrode current collector 200 arranged on a portion between both surfaces of the electrode active material layer 100 has one or more suitable shapes, and may be arranged at one or more suitable positions within the electrode active material layer 100. In FIGS. 9A to 9F, in the electrode active material layer 100 defined by the first side surface SS1, the second side surface SS2, the third side surface SS3, and the fourth side surface SS4, a domain in which the electrode current collector 200 is arranged corresponds to a first domain D1, and a domain that is free of the electrode current collector 200 corresponds to the second domain D2. The electrode active material layer 100 may include a plurality of through-holes TH each having a diameter (e.g., an arbitrary diameter) d1. A first domain D1 is a domain that includes the electrode active material layer 100 and the electrode current collector 200 that is arranged on one surface or between both surfaces of the electrode active material layer 100. For example, the first domain D1 is a domain including the electrode current collector 200 and the electrode active material layer 100 that is arranged on one surface or both surfaces of the electrode current collector 200 in a thickness direction of the electrode 300. A second domain D2 is a domain including the electrode active material layer 100 and free of the electrode current collector 200 that is arranged on one surface or between both surfaces of the electrode current collector 100. For example, the second domain D2 may be the remaining domain of the electrode active material layer 100, except for the first domain D1.

Referring to FIG. 9A, the electrode current collector 200 may be arranged on a portion of the electrode active material layer 100 defined by the first side surface SS1, the second side surface SS2, the third side surface SS3, and the fourth side surface SS4. The electrode current collector 200 may be exposed to the first side surface SS1 of the electrode active material layer 100, and may include a tab TB extending to the outside of the electrode active material layer 100 through the first side surface SS1. A widthwise distance $W_T$ of the tab TB may be 100 % of the widthwise second distance W2 of the electrode current collector 200.

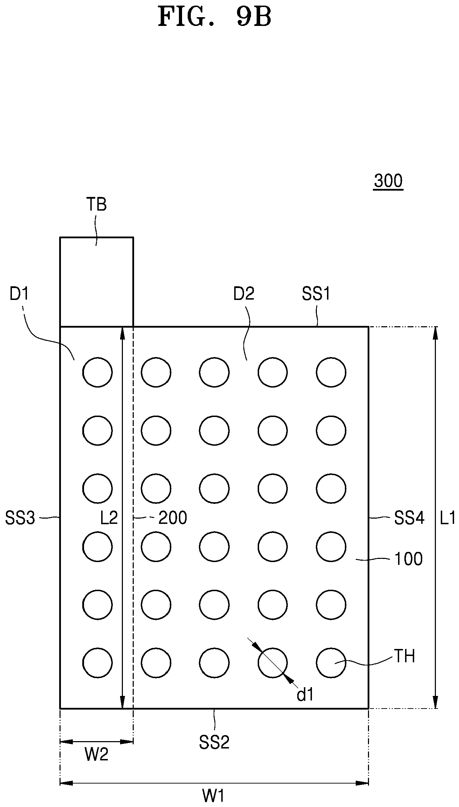

Referring to FIG. 9B, the electrode current collector 200 may be arranged on a portion of the electrode active material layer 100 defined by the first side surface SS1, the second side surface SS2, the third side surface SS3, and the fourth side surface SS4. The electrode current collector 200 may be exposed to the first side surface SS1, the second side surface SS2, and the third side surface SS3 of the electrode active material layer 100, and may include a tab TB extending to the outside of the electrode active material layer 100 through the first side surface SS1. The lengthwise second distance L2 of the electrode current collector 200 may be 100 % of the lengthwise first distance L1 of the electrode active material layer 100. The widthwise second distance W2 of the electrode current collector 200 may be less than 100 % of the widthwise first distance W1 of the electrode active material layer 100.

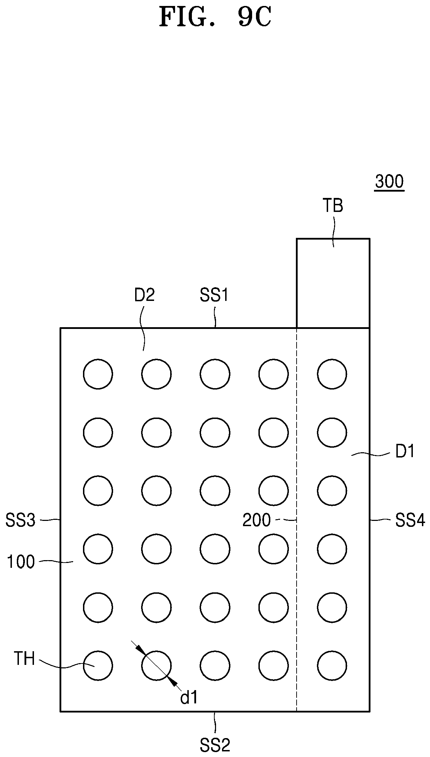

Referring to FIG. 9C, the electrode current collector 200 may be arranged on a portion of the electrode active material layer 100 defined by the first side surface SS1, the second side surface SS2, the third side surface SS3, and the fourth side surface SS4. The electrode current collector 200 may be exposed to the first side surface SS1, the second side surface SS2, and the fourth side surface SS4 of the electrode active material layer 100, and may include a tab TB extending to the outside of the electrode active material layer 100 through the first side surface SS1.

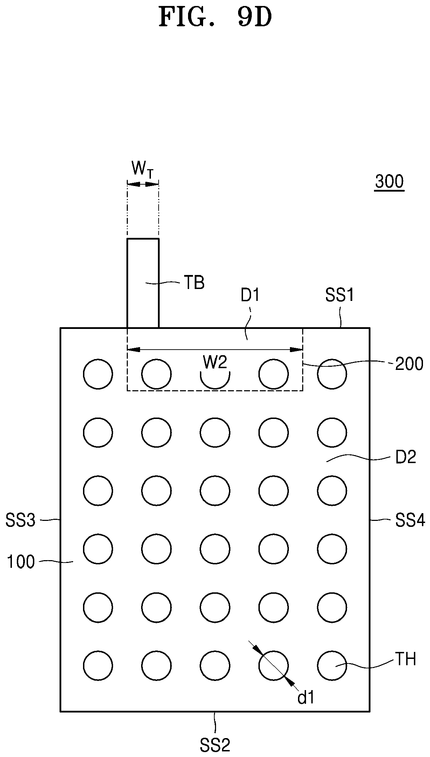

Referring to FIG. 9D, the electrode current collector 200 may be arranged on a portion of the electrode active material layer 100 defined by the first side surface SS1, the second side surface SS2, the third side surface SS3, and the fourth side surface SS4. The electrode current collector 200 may be exposed to the first side surface SS1 of the electrode active material layer 100, and may include a tab TB extending to the outside of the electrode active material layer 100 through the first side surface SS1. The widthwise distance $W_T$ of the tap TB may be less than 100 % of the widthwise second distance W2 of the electrode current collector 200.

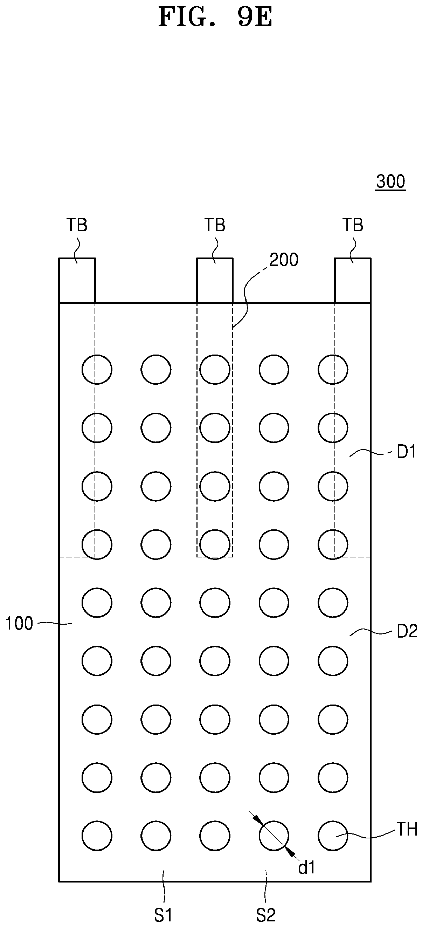

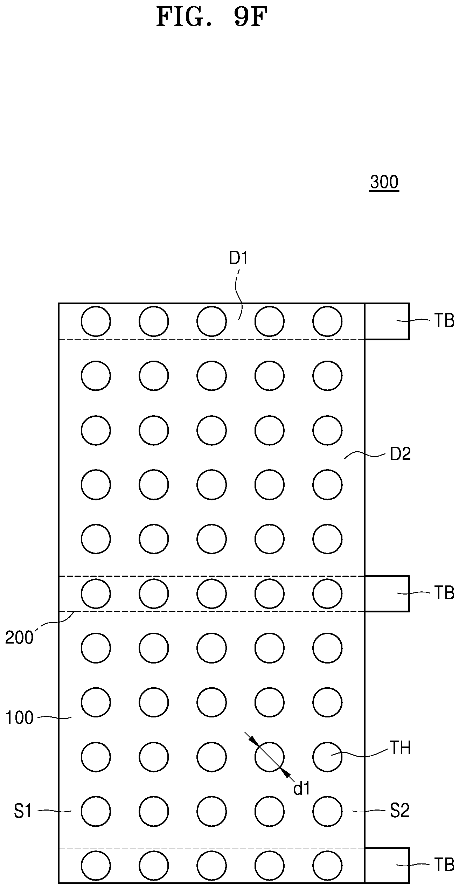

Referring to FIGS. 9E and 9F, a plurality of the electrode current collectors 200 may be arranged on a portion of the electrode active material layer 100 defined by the first side surface SS1, the second side surface SS2, the third side surface SS3, and the fourth side surface SS4. The electrode active material layer 100 may include a plurality of electrode current collectors 200 that are spaced apart from one another along a lengthwise direction or a widthwise direction of the electrode active material layer 100. The plurality of electrode current collectors 200 may be, for example, spaced apart from one another at constant intervals or at different intervals. The plurality of electrode current collectors 200 may form an angle of less than or equal to 45 degrees, less than or equal to 40 degrees, less than or equal to 30, less than or equal to 25 degrees, less than or equal to 20 degrees, less than or equal to 15 degrees, less than or equal to 10 degrees, or less than or equal to 5 degrees, with respect to one surface of the electrode active material layer 100, for example, one or more surfaces of the first surface S1 and the second surface S2. For example, the plurality of current collectors 200 may form an angle of 0 degree with one surface of the electrode active material layer 100, that is, may be arranges in parallel. The plurality of electrode current collectors 200 may be, for example, arranged between the first surface S1 and the second surface S2.

A lithium battery according to another embodiment includes: a cathode; an anode; and an electrolyte arranged between the cathode and the anode, wherein at least one of the cathode and the anode is the electrode described above.

In the lithium battery including the electrode disclosed herein, defects on the surface of the electrode current collector may be prevented or reduced, and by employing an electrode in which a cathode active material includes through-holes, the lithium battery may have, for example, improved cycle characteristics, such as improved high-rate capability, improved lifespan characteristics, and/or the like.

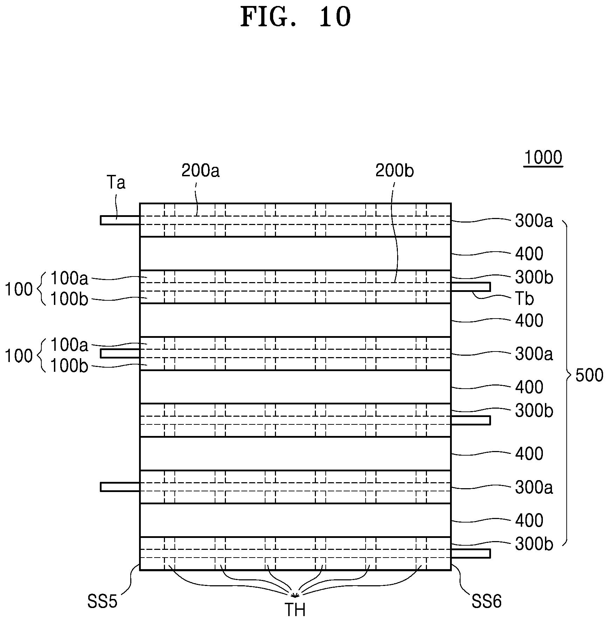

Referring to FIGS. 10 to 12, a lithium battery 1000 includes: a cathode 300a; an anode 300b; an electrolyte 400 arranged between the cathode 300a and the anode 300b, wherein at least one of the cathode 300a and the anode 300b is the electrode described above. The lithium battery 1000 may include an electrode assembly 500. The electrode active material layer 100, 100a, or 100b included in the cathode 300a and/or the anode 300b may include a plurality of through-holes TH each having a diameter (e.g., an arbitrary diameter) d1.

Referring to FIG. 10, the electrode assembly 500 includes: a plurality of cathodes 300a stacked along a thickness direction; a plurality of anodes 300b arranged among the plurality of cathodes 300a; a plurality of electrolytes 400 respectively arranged among the plurality of cathodes 300a and the plurality of anodes 300b. The cathode 300a may include a cathode current collector 200a, and the cathode current collector 200a may include a cathode tab Ta extending to the outside of a cathode active material layer 100a through one side surface SS5 of the electrode assembly 500. The anode 300b may include an anode current collector 200b, and the anode current collector 200b may include an anode tab Tb extending to the outside of an anode active material layer 100b through another side surface SS6 opposite to the one side surface SS5 of the electrode assembly 500. The lithium battery 1000 may include the electrode assembly 500. Because the cathode tab Ta and the anode tab Tb are arranged on side surfaces opposite to each other, the possibility of a short circuit therebetween may be reduced.

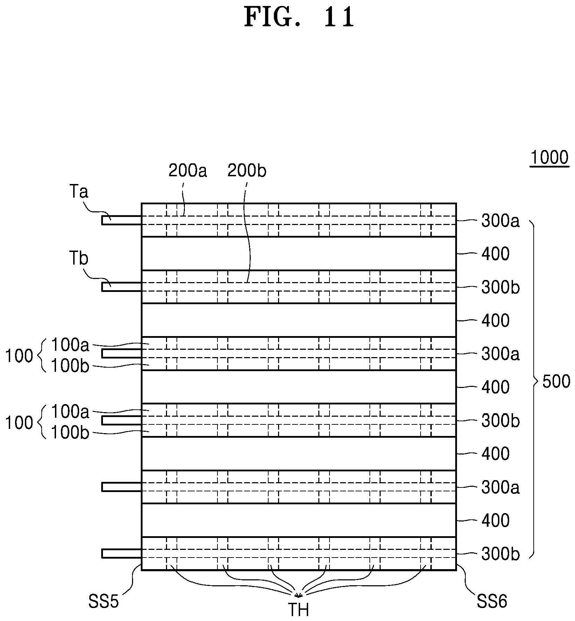

Referring to FIG. 11, the electrode assembly 500 includes: a plurality of cathodes 300a stacked along a thickness direction; a plurality of anodes 300b arranged among the plurality of cathodes 300a; a plurality of electrolytes 400 respectively arranged among the plurality of cathodes 300a and the plurality of anodes 300b. The cathode 300a may include a cathode current collector 200a, and the cathode current collector 200a may include a cathode tab Ta extending to the outside of a cathode active material layer 100a through one side surface SS5 of the electrode assembly 500. The anode 300b may include an anode current collector 200b, and the anode current collector 200b may include an anode tab Tb extending to the outside of an anode active material layer 100b through the same side surface SS5 of the electrode assembly 500. The lithium battery 1000 may include the electrode assembly 500.

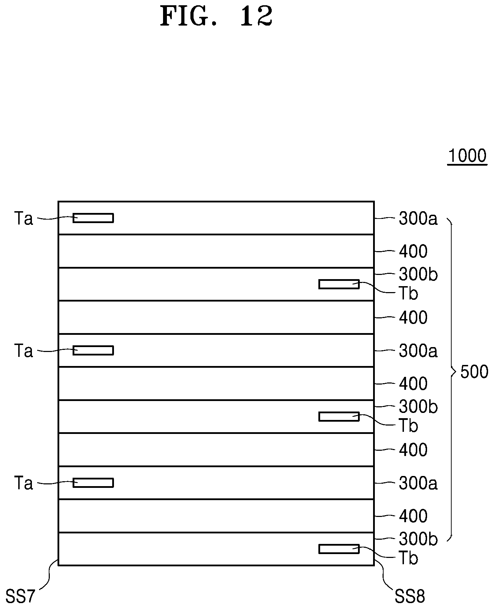

Referring to FIG. 12, on one side surface SS5, a plurality of cathode tabs Ta may be spaced apart at constant intervals from one another in a thickness direction, and a plurality of anode tabs Tb may be spaced apart at constant intervals from one another in a thickness direction. The plurality of cathode tabs Ta may be arranged adjacent to one side surface SS7 in a widthwise direction of the electrode assembly 500, and the plurality of anode tabs Tb may be arranged adjacent to another side surface SS8 in a widthwise direction of the electrode assembly 500. FIG. 12 is a front view of one side surface SS5 of FIG. 10. The lithium battery 1000 may include an electrode assembly 500.

Although the cathode tabs Ta and the anode tabs Tb are arranged on the same side, because they are arranged to be spaced apart from each other in a widthwise direction, the possibility of a short circuit therebetween may be reduced.

According to one or more embodiments, in an electrode assembly including: a plurality of cathodes stacked along a thickness direction; a plurality of anodes arranged among the plurality of cathodes; and a plurality of electrolytes arranged between the plurality of cathodes and the plurality of anodes, when one or more cathodes and/or anodes including a plurality of through-holes are arranged between cathodes and/or anodes not including a plurality of through-holes, the cathodes and/or anodes including the plurality of through-holes may serve as ion conducting layers and/or ion conducting channels of a sort, thereby further improving the cycle characteristics, such as high-rate capability, of a lithium battery including the electrode assembly.

The lithium battery 1000 may be, for example, a lithium ion battery, a lithium solid battery, and a lithium air battery.

A method of preparing an electrode according to one or more embodiments may be provided.

A method of preparing an electrode disclosed herein includes: preparing a dry mixture by dry mixing an electrode active material, a dry conductive material, and a dry binder; preparing a self-standing film by roll-pressing or squeezing the dry mixture; introducing a plurality of through-holes into the self-standing film; providing an electrode current collector, arranging an interlayer on one surface or both surfaces of the electrode current collector; and providing the self-standing film on one surface or both surfaces of the electrode current collector to arrange an electrode active material layer.

In one or more embodiments, in the electrode prepared by this preparation method, the uniformity of a substantially uniform binding force distribution within the electrode may be improved, and thus the performance of a lithium battery utilizing this electrode may be improved. In one or more embodiments, because the electrode active material layer of the electrode prepared by this preparation method includes a plurality of through-holes, the cycle characteristics of a lithium battery employing such an electrode may be improved.

First, a dry mixture may be prepared by dry mixing an electrode active material, a dry conductive material, and a dry binder. The dry mixing refers to mixing in a state where a processing solvent is not included. The processing solvent may be, for example, a solvent utilized in the preparation of an electrode slurry. The processing solvent may be, for example, water, NMP, etc., but is not limited thereto, and any processing solvent that is utilized in the preparation of an electrode slurry may be utilized. The dry mixing may be performed utilizing a stirrer at a temperature of, for example, about 25 °C to about 65 °C. The dry mixing may be performed utilizing a stirrer at a rotation speed of, for example, about 10 rpm to about 10,000 rpm or about 100 rpm to about 10,000 rpm. The dry mixing may be performed utilizing a stirrer, for example, for about 1 minute to about 200 minutes or about 1 minute to about 150 minutes.

The dry mixing may be performed, for example, at least once. First, a first mixture may be prepared by performing first dry mixing of an electrode active material, a dry conductive material, and a dry binder. The first dry mixing may be performed, for example, at a temperature of about 25 °C to about 65 °C, at a rotation speed of 2,000 rpm or less, and for 15 minutes or less. The first dry mixing may be performed, for example, at a temperature of about 25 °C to about 65 °C, at a rotation speed of about 500 rpm to about 2,000 rpm, for about 5 minutes to about 15 minutes. The electrode active material, the dry conductive material, and the dry binder may be uniformly mixed by the first dry mixing. Subsequently, a second mixture may be prepared by performing second dry mixing of an electrode active material, a dry conductive material, and a dry binder. The second dry mixing may be performed, for example, at a temperature of about 25 °C to about 65 °C, at a rotation speed of 4,000 rpm or more, and for 10 minutes or more. The second dry mixing may be performed, for example, at a temperature of about 25 °C to about 65 °C, at a rotation speed of about 4,000 rpm to about 9,000 rpm, and for 10 minutes to 60 minutes. A dry mixture including a fibrillated dry binder may be obtained by the second dry mixing.

The stirrer may be, for example, a kneader. The stirrer may include, for example, a chamber; one or more rotating shafts which are located inside the chamber and rotate; and a blade rotatably coupled to the rotation shafts and located in the lengthwise direction of the rotation shafts. The blade may be, for example, one or more of (e.g., one or more selected from) a ribbon blade, a sigma blade, a jet (Z) blade, a dispersion blade, and/or a screw blade. By including the blade, it is possible to prepare a dough-like mixture by effectively mixing the electrode active material, the dry conductive material, and the dry binder without a solvent.

As the dry conductive material, carbon black, graphite fine particles, natural graphite, artificial graphite, acetylene black, Ketjen black, carbon fiber; carbon nanotubes; metal powder, metal fiber or metal tube of, for example, copper, nickel, aluminum, or silver; or conductive polymers such as polyphenylene derivatives may be utilized, but the disclosure is not limited thereto. Any conductive material available in the art may be utilized. The conductive material may be, for example, a carbon-based conductive material. Further details of the dry conductive material are provided in the descriptions of the electrode above.

Examples of the dry binder include vinylidene fluoride/hexafluoropropylene copolymer, polyvinylidene fluoride, polyacrylonitrile, polymethylmethacrylate, polytetrafluoroethylene (PTFE), mixtures of these polymers, and/or the like, and styrene butadiene and/or a rubber-based polymer, and examples of the solvent include N-methylpyrrolidone (NMP), acetone, water, and/or the like. However, the dry binder and the solvent are not limited thereto, and any material available in the art may be utilized. Further details of the dry binder are provided in the descriptions of the electrode above.

A plasticizer or a pore former may be further added to the dry mixture to form pores inside an electrode plate.

Amounts of the electrode active material, the dry conductive material, and the dry binder which are utilized in the dry mixture may each independently be the same as described above in connection with the electrode.

The cathode may utilize a cathode active material as an electrode active material. The cathode active material may be understood by referring to the description provided in connection with the electrode. The anode may utilize an anode active material as an electrode active material. The anode active material may be understood by referring to the description provided in connection with the electrode.

Then, the prepared dry mixture may be roll-pressed or squeezed to prepare a self-standing film.

The prepared dry mixture may be squeezed in the form of a sheet by, for example, putting it into a squeezing apparatus. A pressure during squeezing may be, for example, about 4 MPa to about 100 MPa or about 10 MPa to about 90 MPa. The dry mixture thus obtained may be in a sheet form. A thickness and a shape of the self-standing film may be selected according to charge/discharge characteristics and shape of the required battery.

Next, a plurality of through-holes may be introduced into the self-standing film.

The plurality of through-holes may be uniformly formed throughout the self-standing film as shown in FIGS. 4 and 5. Examples of a method of introducing the through-holes include laser drilling, punching, a roller having irregularities on a surface, and/or the like, but are not limited thereto, and any method and/or device capable of introducing through-holes in the art may be utilized. The diameter of the through-holes, the pitch between the through-holes, and/or the like may be selected according to the required charging/discharging characteristics and shape of the battery.

Next, an electrode current collector may be provided, and an interlayer arranged on one surface or both surfaces of the electrode current collector may be included.

The electrode current collector may include the interlayer arranged on one surface or both surfaces of the electrode current collector, and details of the interlayer may be understood by referring to the description provided in connection with the electrode.

A material for forming the electrode current collector may be understood by referring to the description provided in connection with the electrode current collector. The cathode current collector may be, for example, an aluminum foil. An anode current collector may be, for example, a copper foil.

The interlayer may be coated on one surface or both surfaces of the electrode current collector by a dry method or a wet method. Detailed coating method may be understood by referring to the description provided in connection with the electrode current collector including the interlayer.

Next, the self-standing film may be provided on one surface or both surfaces of the electrode current collector so that an electrode active material layer may be arranged thereon.

By arranging the self-standing film on one surface or both surfaces of the electrode current collector and laminating the same, an electrode including the electrode active material layer arranged on one surface or both surfaces of the electrode current collector may be prepared.

Because the interlayer is arranged on one surface or both surfaces of the electrode active material layer and the interlayer may have adhesive force by including a binder, the lamination of the electrode current collector and the self-standing film may be easily performed at a low pressure.

The lamination may be performed by, for example, roll-pressing. Examples of a method of the roll-pressing include roll-press, a flat press, and/or the like, but are not necessarily limited thereto. The pressure during roll-pressing may be less than or equal to 50 %, less than or equal to 10 %, or less than or equal to 1 %, of the pressure applied during the production of a dry electrode. The pressure during roll-pressing may be, for example, about 0.01 ton/cm to about 10.0 ton/cm or about 0.1 ton/cm to about 10.0 ton/cm. When the pressure during roll-pressing is excessively increased, a thin-film electrode current collector may crack. When the pressure during roll-pressing is too low, the binding force between the electrode current collector and the electrode active material layer may be lowered.

The lithium battery may be prepared by, for example, an example method described in more detail below, but is not limited thereto, and the method may vary depending on the conditions required.

First, one or all of the cathode and/or the anode may be prepared according to the electrode preparation method described above. In one or more embodiments, when one of the cathode and/or the anode is prepared by the electrode preparation method described above, the other electrode may be prepared by the wet preparation method. For example, another electrode may be prepared by preparing an electrode slurry including an electrode active material, a conductive material, a binder, and a solvent, and coating the prepared electrode slurry on an electrode current collector and drying the same. The conductive material and binder included in an electrode prepared by a wet method may include (e.g., may be selected from) the conductive material and/or the binder which are utilized in the production of the dry electrode.

Next, a separator to be inserted between the cathode and the anode may be prepared.

For utilization as the separator, any material available in a lithium battery in the art may be utilized. As the separator, for example, a separator having low resistance to ion movement of an electrolyte and an excellent or suitable electrolyte-moisturizing ability may be utilized. The separator may be, for example, a non-woven fabric or a woven fabric including at least one of (e.g., one selected from) fiberglass, polyester, Teflon, polyethylene, polypropylene, PTFE, and/or a combination thereof. For a lithium-ion battery, for example, a rollable separator including polyethylene, polypropylene, and/or the like is utilized, and for a lithium-ion polymer battery, a separator having excellent or suitable organic electrolyte impregnation ability is utilized.

The separator may be prepared by the following example method, but the method is not limited thereto, and may be adjusted according to the conditions required.

First, a polymer resin, a filler, and a solvent may be mixed to prepare a separator composition. The separator composition may be directly applied and dried on an electrode to form a separator. In one or more embodiments, a film obtained by casting and drying the separator composition on a support and then separating the composition from the support may be laminated on the electrode to form a separator.

The polymer utilized for preparing the separator is not particularly limited, and any polymer available for a binder of an electrode plate may be utilized. For example, as the polymer, a vinylidene fluoride/hexafluoropropylene copolymer, PVDF, polyacrylonitrile, polymethyl methacrylate, or a mixture thereof may be utilized.

Next, an electrolyte may be prepared.

The electrolyte may be, for example, an organic electrolyte solution. The organic electrolyte solution may be, for example, prepared by dissolving a lithium salt in an organic solvent.

For utilization as the organic solvent, any suitable organic solvent available in the art may be utilized. The organic solvent may be, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, $\gamma$-butyrolactone, dioxolan, 4-methyl dioxolan, N, N-dimethyl formamide, dimethyl acetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

For utilization as the lithium salt, any suitable lithium salt available in the art may be utilized. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (where x and y are natural numbers), LiCl, Lil, or a mixture thereof.

In one or more embodiments, the electrolyte may be a solid electrolyte. The solid electrolyte may be, for example, boron oxide or lithium oxynitride, but is not limited thereto, and any material available as the solid electrolyte in the art may be utilized. The solid electrolyte may be formed on the anode by a method such as sputtering, or a separate solid electrolyte sheet may be stacked on the anode. The solid electrolyte may be, for example, an oxide-based solid electrolyte or a sulfide-based solid electrolyte.

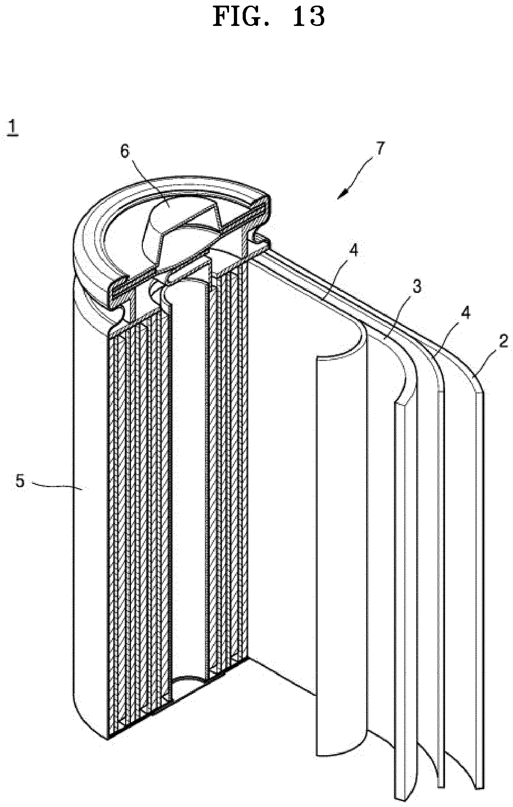

Referring to FIG. 13, a lithium battery 1 according to one or more embodiments includes a cathode 3, an anode 2, and a separator 4. The cathode 3, the anode 2, and the separator 4 may be wound or folded to form a battery structure 7. The battery structure 7 may be accommodated in a battery case 5. An organic electrolyte solution may be injected into the battery case 5, and the battery case 5 may be sealed with a cap assembly 6 to complete the preparation of the lithium battery 1. The battery case 5 may be cylindrical, but is not necessarily limited thereto, and, for example, the shape may be a square, a thin film, and/or the like.

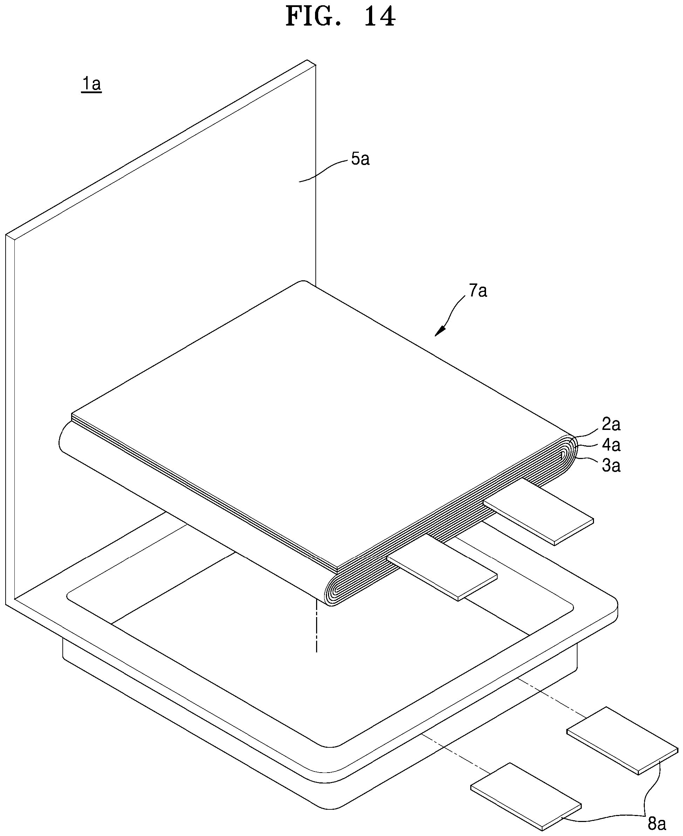

Referring to FIG. 14, the lithium battery 1a according to one or more embodiments includes a cathode 3a, a anode 2a, and a separator 4a. The separator 4a may be arranged between the cathode 3a and the anode 2a, and the cathode 3a the anode 2a, and the separator 4a may be wound or folded to form a battery structure 7a. The battery structure 7a may be accommodated in a battery case 5a. An electrode tab 8a acting as an electrical path for inducing the current formed in the battery structure 7a to the outside may be included. Then, the battery case 5 may be filled with an organic electrolyte solution, and then sealed, thereby completing the preparation of the lithium battery 1a. The battery case 5a may be a square-type or kind, but is not necessarily limited thereto, and, for example, the shape may be a cylinder, a thin film, and/or the like.

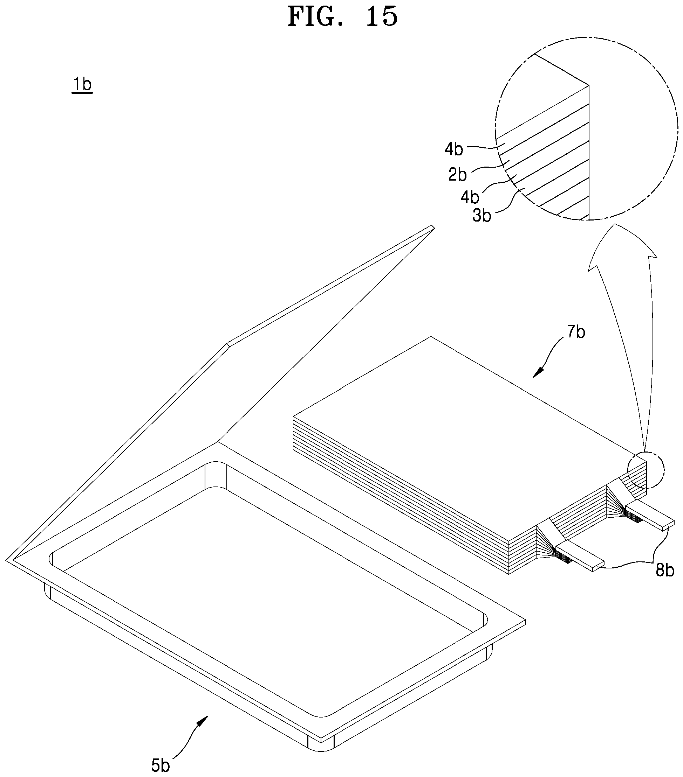

Referring to FIG. 15, the lithium battery 1b according to one or more embodiments includes a cathode 3b, a anode 2b, and a separator 4b. The separator 4b may be disposed between the cathode 3b and the anode 2b to form a battery assembly 7b. The battery structure 7b may be stacked in a bi-cell structure, and then accommodated in a battery case 5b. An electrode tab 8b acting as an electrical path for inducing the current formed in the battery structure 7b to the outside may be included. Then, the battery case 5b may be filled with an organic electrolyte solution, and then sealed, thereby completing the preparation of the lithium battery 1b. The battery case 5b may be a square-type or kind, but is not necessarily limited thereto, and, for example, the shape may be a cylinder, a thin film, and/or the like.

A pouch-type or kind lithium battery may be utilized as a battery case for each of the lithium batteries of FIGS. 13 to 15. Such a pouch-type or kind lithium battery may include at least one battery assembly. A separator may be arranged between a cathode and an anode to provide a battery assembly. After the battery assembly is stacked in a bi-cell structure, the stacked battery assembly may be impregnated with an organic electrolytic solution, and then accommodated and sealed in a pouch to complete a pouch-type or kind lithium battery. For example, the cathode, the anode, and the separator may be simply stacked and accommodated in the form of an electrode assembly in a pouch. In one or more embodiments, the cathode, the anode, and the separator may be wound or folded into an electrode assembly in the form of a jelly roll, and then, accommodated in the pouch. Then, an organic electrolyte may be injected into the pouch, which is then sealed to complete the preparation of the lithium battery.

Because the lithium battery has excellent or suitable lifetime characteristics and high-rate characteristics, the lithium battery may be utilized in electric vehicles (EVs). For example, the lithium battery may be utilized in hybrid vehicles such as plug-in hybrid electric vehicles (PHEVs). In one or more embodiments, the lithium battery may be utilized in fields where a large amount of power storage is required. For example, the lithium battery may be utilized in electric bicycles, power tools, and/or the like.

A plurality of lithium batteries may be stacked to form a battery module, and a plurality of battery modules may form a battery pack. Such a battery pack may be utilized in any device requiring high capacity and high output. For example, the battery pack may be utilized for laptops, smartphones, electric vehicles, and/or the like. The battery module may include, for example, a plurality of batteries and a frame for holding the same. The battery pack may include, for example, a plurality of battery modules and a bus bar connecting the same. The battery module and/or battery pack may further include a cooling device. A plurality of battery packs may be controlled or selected by a battery management system. The battery management system may include a battery pack and an electronic control device connected to the battery pack.

The present disclosure will be described in more detail through the following examples and comparative examples. However, these examples are only for illustrative purposes, and the scope of the present disclosure is not limited thereto.

**Preparation of lithium battery (half cell)**

**Example 1: Dry cathode, total arrangement of current collector, multiple through-holes, 1 % through-hole surface, and 1 $\mu$m through-hole diameter**

**Preparation of cathode**

$LiNi_{0.91}Co_{0.05}Al_{0.04}O_2$ (hereinafter referred to as NCA91) as a cathode active material, a carbon conductive material (e.g., Denka Black), and polytetrafluoroethylene (PTFE) were put into a blade mixer at a weight ratio of 93:4:3, and subjected to first dry mixing at a speed of 1,000 rpm at 25 °C for 10 minutes, so to prepare a first mixture in which the active material, the conductive material, and the binder were uniformly mixed.

Subsequently, to allow fibrillization of the binder, the first mixture was additionally subjected to a second mixing at a speed of 5,000 rpm at 25 °C for 20 minutes, so as to prepare a second mixture. In the preparation of the first mixture and the second mixture, a separate solvent was not utilized.

The second mixture thus prepared was added to a squeezing device to be squeezed to prepare a self-standing film of the cathode active material layer in the form of a sheet. The pressure at the time of squeezing was 50 MPa.

By utilizing a laser puncher, multiple through-holes that were periodically and regularly spaced apart at constant intervals were formed in the self-standing film of the cathode active material layer.

Here, a diameter of the through-hole was 1 $\mu$m, and the shape of the through-hole was circular. The multiple through-holes were formed perpendicularly to the surface of the self-standing film of the cathode active material layer.

A proportion of the area occupied by the multiple through-holes relative to the entire surface area of one surface of the cathode active material layer was 1 %.

On both surfaces of an aluminum thin film having a thickness of 12 $\mu$m, a cathode current collector on which a carbon layer was arranged as an interlayer was prepared.

The carbon layer was prepared by coating a composition including a carbon conductive material (e.g., Danka black) and PVDF on the aluminum thin film and drying the same. Here, a thickness of the carbon layer arranged on one surface of the aluminum thin film was about 1 $\mu$m.

By arranging a self-standing film of a first cathode active material layer, arranging a cathode current collector on the self-standing film of the first cathode active material layer, and arranging a self-standing film of a second cathode active material layer on the cathode current collector, a laminated body having a cathode active material layer/carbon layer/aluminum/carbon layer/cathode active material was prepared. Here, a width and a length of the cathode current collector were the same as those of the self-standing film of the cathode active material layer.

The prepared laminated body was roll-pressed to prepare a dry cathode having a substantially uniform thickness. The pressure during the roll-pressing was 3.0 ton/cm. A thickness of the dry cathode was 200 $\mu$m. The thickness of the dry cathode was measured by utilizing a scanning electron microscope on a cross-section of the dry cathode.

As a result of measuring the cross-section of the prepared cathode by utilizing a scanning electron microscope, the surface of the cathode current collector adjacent to the bottom surface of the through-holes was flat, and no detent or burr was observed.

An interlayer was arranged on the bottom surface of the through-holes, and accordingly, the interlayer separated the through-holes from the cathode current collector.

d1/T1, which is a ratio of a diameter d1 of the through-hole to a thickness T1 of the electrode active material layer, was 0.01.

**Preparation of coin cell**

A coin cell was prepared by utilizing the cathode prepared above, lithium metal as a counter electrode, a PTFE separator, and as an electrolyte, a solution in which 1.3 M $LiPF_6$ was dissolved in ethylene carbonate (EC)+ethylmethyl carbonate (EMC)+dimethyl carbonate (DMC) (at a volume ratio of 3:4:3).

**Example 2: Dry cathode, total arrangement of current collector, multiple through-holes, 5 % through-hole surface, and 1 $\mu$m through-hole diameter**

**Preparation of cathode**

A cathode was prepared in substantially the same method as in Example 1, except that the proportion of the area occupied by through-holes relative to the entire area of one surface of the cathode active material layer was increased to 5 %.

**Preparation of coin cell**

A coin cell was prepared by the same process as in Example 1, except that the cathode prepared above was utilized.

**Example 3: Dry cathode, total arrangement of current collector, multiple through-holes, 0.2 % through-hole surface, and 1 $\mu$m through-hole diameter**

**Preparation of cathode**

A cathode was prepared in substantially the same method as in Example 1, except that the proportion of the area occupied by through-holes relative to the entire area of one surface of the cathode active material layer was reduced to 0.2 %.

**Preparation of coin cell**

A coin cell was prepared by the same process as in Example 1, except that the cathode prepared above was utilized.

**Example 4: Dry cathode, total arrangement of current collector, multiple through-holes, 1 % through-hole surface, and 10 $\mu$m through-hole diameter**

**Preparation of cathode**

A dry electrode was prepared by the same process as in Example 1, except that the diameter (e.g., an average diameter) of the through-holes was increased to 10 $\mu$m. d1ГГ1, which is a ratio of a diameter d1 of the through-hole (e.g., an average diameter of the through-holes) to a thickness T1 of the electrode active material layer, was 0.1.

**Preparation of coin cell**

A coin cell was prepared by the same process as described in Example 1, except that the cathode prepared above was utilized.

**Example 5: Dry cathode, total arrangement of current collector, multiple through-holes, 1 % through-hole surface, and 0.1 $\mu$m through-hole diameter**

**Preparation of cathode**

A dry electrode was prepared by the same process as in Example 1, except that the diameter (e.g., an average diameter) of the through-holes was decreased to 0.1 $\mu$m. d1ГГ1, which is a ratio of a diameter d1 of the through-hole (e.g., an average diameter of the through-holes) to a thickness T1 of the electrode active material layer, was 0.001.

**Preparation of coin cell**

A coin cell was prepared by the same process as in Example 1, except that the cathode prepared above was utilized.

**Example 6: Dry cathode, partial arrangement of current collector, multiple through-holes, 1 % through-hole surface, and 1 μm through-hole diameter**

**Preparation of cathode**

An electrode was prepared by the same manner as in Example 1, except that, as a cathode current collector, a cathode current collector having a width the same as the width of the self-standing film of the cathode active material layer and a length 1/4 of the length of the self-standing film of the cathode active material layer was utilized.

The prepared dry cathode had a cross-section shown in FIG. 6A. The prepared cathode had a structure consisting of a first domain D1 in which the cathode current collector was arranged between both surfaces of the cathode active material layer and a second domain D2 in which the cathode current collector was not arranged between both surfaces of the cathode active material layer. A plurality of through-holes was arranged in both the first domain D1 and the second domain D2.

**Preparation of coin cell**

A coin cell was prepared by the same process as in Example 1, except that the cathode prepared above was utilized.

**Comparative Example 1: Wet cathode, total arrangement of current collector, multiple through-holes, 1 % through-hole surface, and 1 μm through-hole diameter**

**Preparation of cathode**

A mixture in which $LiNi_{0.91}Co_{0.05}Al_{0.04}O_2$ as a cathode active material, a carbon cathode active material (e.g., Denka Black), and PVDF were mixed at a weight ratio of 92:4:4 was mixed with NMP in an agate mortar to prepare a slurry.

The slurry was bar-coated entirely on one surface of an aluminum current collector having a thickness of 15 μm, dried the same at room temperature, and then dried the same again at 120 °C under vacuum, so as to introduce a first cathode active material layer.

Subsequently, by the same method, a second cathode active material layer was introduced onto the other surface of the aluminum current collector, so as to prepare a laminated body. The prepared laminated body was roll-pressed to prepare a cathode. The pressure during the roll-pressing was 4.0 ton/cm.

By utilizing a laser puncher, multiple through-holes that were periodically and regularly spaced apart at constant intervals were formed in both surfaces of the prepared cathode.

Here, a diameter of the through-hole (e.g., an average diameter of the through-holes) was 1 μm, and the shape of the through-hole (e.g., the shape of each of the through-holes) was circular. The multiple through-holes were formed perpendicularly to the surface of the self-standing film of the cathode active material layer.

A proportion of the area occupied by the multiple through-holes relative to the entire surface area of one surface of the cathode active material layer was 1 %. Here, a depth of the through hole (e.g., the depth of each of the through-holes) was the same as the thickness of the cathode active material.

As a result of measuring the cross-section of the prepared cathode by utilizing a scanning electron microscope, a portion of the surface of the cathode current collector adjacent to the bottom surface of the through-holes was depressed by the laser during the formation of through-holes, and burrs were generated.

The prepared cathode had a cross-sectional structure similar to that shown in FIG. 2A.

**Preparation of coin cell**

A coin cell was prepared by the same process as in Example 1, except that the cathode prepared above was utilized.

**Comparative Example 2: Wet cathode, total arrangement of current collector, and free of through-holes**

**Preparation of cathode**

An electrode was prepared by the same process as in Comparative Example 1, except that a step of introducing through-holes into a cathode active material layer was excluded.

**Preparation of coin cell**

A coin cell was prepared by the same process as in Example 1, except that the cathode prepared above was utilized.

**Comparative Example 3: Dry cathode, total arrangement of current collector, and free of through-holes**

**Preparation of cathode**

A dry cathode was prepared by the same process as in Example 1, except that a step of introducing through-holes into a cathode active material layer was excluded.

**Preparation of coin cell**

A coin cell was prepared by the same process as in Example 1, except that the cathode prepared above was utilized.

**Comparative Example 4: Dry cathode, total arrangement of current collector, and free of interlayer**

A dry cathode was prepared by the same process as in Example 1, except that an aluminum thin film having a thickness of 12 $\mu$m and not coated with a carbon layer was utilized as a cathode current collector.
Because, in the prepared cathode, a portion of the cathode active material layer remained separated from the cathode current collector, a coin cell could not be prepared.

**Evaluation Example 1: Evaluation I of vertical force of cathode active material layer**

The binding characteristics of the cathode active material layer included in the cathodes prepared in Examples 1 to 6 and Comparative Examples 1 to 4 were analyzed utilizing SAICAS (SAICAS EN-EX, Daipla Wintes, JAPAN).
The analysis was performed on the first domain in which the cathode current collector was arranged between both surfaces of the cathode active material layer. The analysis of the binding characteristics of the cathodes of the Examples and Comparative Examples were performed on a domain free of through-holes.
The vertical force ($F_V$) according to the depth was measured by performing a constant velocity analysis utilizing a diamond blade having the width of 1 mm at the clearance angle of 10°, at the rake angle of 20°, at the shear angle of 45°, at the horizontal velocity of 4 $\mu$m/s, and at the vertical velocity of 0.4 $\mu$m/s.
First, a first constant velocity analysis was performed from a first position on the surface of the cathode active material layer included in the first domain to the surface of the cathode current collector, and the blade was horizontally moved along the surface of the cathode current collector to remove the cathode active material layer. Then, at a position 10 $\mu$m backward from the first position, a second constant velocity analysis was performed under the same conditions as the first constant velocity analysis. The data measured from the second constant velocity analysis were utilized.
With respect to the cathode active material layer, the vertical force of the cathode active material layer was measured, and the measured data was normalized as the binding force graph area to derive the vertical relative force ($F_{VR}$) according to the depth of the cathode active material layer.
For the vertical force of the cathode active material layer, data measured in the section from a first point spaced 5% from the surface of the cathode active material layer to a second point spaced 5% from the surface of the electrode current collector with respect to the total thickness of the cathode active material layer, was utilized. For example, data near the surface of the cathode active material layer and data near the surface of the electrode current collector were excluded to prevent or reduce measurement errors.
From the derived vertical relative force ($F_{VR}$) data of the cathode active material layer, a rate of change in vertical relative force ($F_{VR}$) was calculated utilizing Equation 1. Some of the results were shown in Table 1.

## Equation 1

Rate of change in vertical relative force ($F_{VR}$) = [(maximum value of vertical relative force - minimum value of vertical relative force)/minimum value of vertical relative force] × 100

**Table 1**

|  | Rate of change in vertical relative force [%] |
|---|---|
| Comparative Example 2 | 1718 |
| Example 1 | 95 |

As shown in Table 1, the rate of change in vertical relative force of the cathode active material layer included in the cathode of Example 1 was less than or equal to 300 %.

Accordingly, it was confirmed that the cathode active material layer had a binding force and a composition distribution that are substantially uniform regardless of the position in the thickness direction of the cathode active material layer.

In contrast, the rate of change in the vertical force of the cathode active material layer included in the cathode of Comparative Example 2 was greater than 300 %.

Accordingly, it was confirmed that the cathode active material layer had a binding force and a composition distribution that significantly vary depending on the position in the thickness direction of the cathode active material layer.

**Evaluation Example 2: Evaluation II of horizontal force of cathode active material layer**

The binding characteristics of the cathode active material layer included in the cathodes prepared in Examples 1 to 6 and Comparative Examples 1 to 4 were analyzed utilizing SAICAS (SAICAS EN-EX, Daipla Wintes, JAPAN).

The analysis was performed on the first domain in which the cathode current collector was arranged between both surfaces of the cathode active material layer. The analysis of the binding characteristics of the cathodes of the Examples an Comparative Examples were performed on a domain free of through-holes.

The horizontal force ($F_H$) according to the depth was measured by performing a constant velocity analysis utilizing a diamond blade having the width of 1 mm at the clearance angle of 10°, at the rake angle of 20°, at the shear angle of 45°, at the horizontal velocity of 4 $\mu$m/s, and at the vertical velocity of 0.4 $\mu$m/s.

First, a first constant velocity analysis was performed from a first position on the surface of the cathode active material layer included in the first domain to the surface of the cathode current collector, and the blade was horizontally moved along the surface of the cathode current collector to remove the cathode active material layer. Then, at a position 10 $\mu$m backward from the first position, a second constant velocity analysis was performed under the same conditions as the first constant velocity analysis. The data measured from the second constant velocity analysis were utilized.

With respect to the total thickness of the cathode active material layer, a first horizontal force ($F_{H1}$) at a first point spaced apart by 10 % from the surface of the cathode active material layer and a second horizontal force ($F_{H2}$) at a second point spaced apart by 10 % from the surface of the cathode current collector were measured.

Some of the results of evaluating the horizontal force were shown in Table 2. The rate of the horizontal force at the second point to the horizontal force at the first point is defined by Equation 2.

## Equation 2

Rate of horizontal force at second point to horizontal force at first point (%) =

$[F_{H2}/F_{H1}] \times 100$

**Table 2**

|  | Rate of horizontal relative force [%] |
|---|---|
| Comparative Example 2 | 45 |

(continued)

|  | Rate of horizontal relative force [%] |
|---|---|
| Example 1 | 75 |

As shown in Table 2, the rate of the horizontal force in the cathode active material layer of Example 1 was increased compared to the cathode active material layer of Comparative Example 2.

As a result, it was confirmed that, compared to the cathode active material layer of Comparative Example 2, the cathode active material layer of Example 1 had more substantially uniform binding force and composition distribution.

**Evaluation Example 3: Evaluation of stretchability**

Stretchability of the cathodes of Example 6 and Comparative Examples 1 to 3 was determined by utilizing a universal testing machine.

After fixing both terminal ends in a lengthwise direction of the cathode, the cathode was stretched in a lengthwise direction thereof by a distance that corresponds to 10 % of the length of the cathode, and then shrunk to an initial length of the cathode, so as to determine stretchability of the cathode.

In the cathode of Example 6, no cracks and/or the like occurred on the cathode after stretching and shrinking. Therefore, it was confirmed that the cathode of Example 6 was stretchable.

In the cathodes of Comparative Examples 1 to 3, cracks occurred on the cathode due to cracks that occurred on the cathode current collector. Accordingly, the cathodes of Comparative Examples 1 to 3 were not stretchable.

**Evaluation Example 4: Evaluation of charging/discharging characteristics at room temperature**

Each of the lithium batteries prepared in Examples 1 to 6 and Comparative Examples 1 to 4 was charged with a constant current of 0.1 C rate at 25 °C until a voltage reached 4.4 voltage (V) (vs. Li), and was then cut-off at a current of 0.05 C rate while maintaining the voltage at 4.4 V in a constant voltage mode. Subsequently, each of the lithium batteries was discharged at a constant current of 0.1 C rate until the voltage reached 2.8 V (vs. Li) (formation cycle).

Each of the lithium batteries that had undergone the formation cycle was charged with a constant current at 25 °C at a rate of 0.5 C until the voltage reached 4.4 V (vs. Li). Subsequently, each of the lithium batteries was discharged at a constant current of 0.5 C rate until the voltage reached 2.8 V (vs. Li) during discharging, and this cycle was repeated under the same conditions up to the 100th cycle (repeated 100 times).

In all charge/discharge cycles, a 10-minute stop time was provided after every one charge/discharge cycle. Some of the results of the room-temperature charge/discharge test are shown in Table 3. Capacity retention rate at the 100th cycle is defined by Equation 3.

## Equation 3

$$\text{Capacity retention ratio [\%]} = [\text{discharge capacity in } 100^{th} \text{ cycle/discharge capacity in } 1^{st} \text{ cycle}] \times 100$$

**Table 3**

| | Electrode type or kind | Arrangement of current collector | Presence or absence of through-hole// shape/burr | d1 (Through-hole diameter, μm) | A1 (Through-hole area, %) | d1/T1 (ratio of through-hole diameter/ electrode thickness) | Capacity retention rate [%] |
|---|---|---|---|---|---|---|---|
| Example 1 | Dry | Total | Yes/o/- | 1 | 1 | 1/100 | 94.2 |
| Example 2 | Dry | Total | Yes/o/- | 1 | 5 | 1/100 | 93.2 |
| Example 3 | Dry | Total | Yes/o/- | 1 | 0.2 | 1/100 | 90.8 |
| Example 4 | Dry | Total | Yes/o/- | 10 | 1 | 10/100 | 92.8 |

(continued)

|  | Electrode type or kind | Arrangement of current collector | Presence or absence of through-hole// shape/burr | d1 (Through-hole diameter, $\mu$m) | A1 (Through-hole area, %) | d1/T1 (ratio of through-hole diameter/ electrode thickness) | Capacity retention rate [%] |
|---|---|---|---|---|---|---|---|
| Example 5 | Dry | Total | Yes/o/- | 0.1 | 1 | 0.1/100 | 91.9 |
| Example 6 | Dry | Partial | Yes/o/- | 1 | 1 | 1/100 | 89.5 |
| Comparative Example 1 | Wet | Total | Yes/o/burr | 1 | 1 | 1/100 | 83.1 |
| Comparative Example 2 | Wet | Total | Absent | - | - | - | 79.2 |
| Comparative Example 3 | Dry | Total | Absent | - | - | - | 81.5 |

As shown in Table 3, the lithium batteries of Examples 1 to 6 had improved high-temperature lifespan characteristics compared to the lithium batteries of Comparative Examples 1 to 3.

In particular, the lithium batteries of Examples 1 to 6 employing a cathode including through-holes exhibited improved high-temperature lifespan characteristics compared to the lithium batteries of Comparative Examples 2 and 3 employing a cathode free of through-holes.

The lithium batteries of Examples 1 to 6 employing a dry cathode including burr-free through-holes exhibited improved high-temperature lifespan characteristics compared to the lithium battery of Comparative Example 1 employing a wet cathode including through-holes with a burr.

**Evaluation Example 5: Evaluation of high-rate capability at room temperature**

Each of the lithium batteries prepared in Examples 1 to 6 and Comparative Examples 1 to 4 was charged with a constant current of 0.1 C rate at 25 °C until a voltage reached 4.4 voltage (V) (vs. Li), and was then cut-off at a current of 0.05 C rate while maintaining the voltage at 4.4 V in a constant voltage mode. Subsequently, each of the lithium batteries was discharged at a constant current of 0.1 C rate until the voltage reached 2.8 V (vs. Li) (formation cycle).

Each of the lithium batteries that had undergone the formation cycle was charged with a constant current at 25 °C at a rate of 0.2 C until the voltage reached 4.4 V (vs. Li). Subsequently, each of the lithium batteries was discharged with a constant current rate of 0.2 C until a voltage of 2.8 V (vs. Li) was reached during discharging (1st cycle).

Each of the lithium batteries that had undergone the 1st cycle was charged with a constant current at 25 °C at a rate of 0.2 C until the voltage reached 4.4 V (vs. Li). Subsequently, the batteries were discharged at a constant current rate of 0.33 C until the voltage reached 2.8 V (vs. Li) (2nd cycle).

Each of the lithium batteries that had undergone the 2nd cycle was charged with a constant current at 25 °C at a rate of 0.2 C until the voltage reached 4.4 V (vs. Li). Subsequently, the batteries were discharged at a constant current rate of 0.5 C until the voltage reached 2.8 V (vs. Li) (3rd cycle).

Each of the lithium batteries that had undergone the 3rd cycle was charged with a constant current at 25 °C at a rate of 0.2 C until the voltage reached 4.4 V (vs. Li). Subsequently, each of the lithium batteries wase discharged with a constant current rate of 1.0 C until a voltage of 2.8 V (vs. Li) was reached during discharging (4th cycle).

Each of the lithium batteries that had undergone the 4th cycle was charged with a constant current at 25 °C at a rate of 0.2 C until the voltage reached 4.4 V (vs. Li). Subsequently, each of the lithium batteries wase discharged with a constant current rate of 2.0 C until a voltage of 2.8 V (vs. Li) was reached during discharging (5th cycle).

Each of the lithium batteries that had undergone the 5th cycle was charged with a constant current at 25 °C at a rate of 0.2 C until the voltage reached 4.4 V (vs. Li). Subsequently, each of the lithium batteries wase discharged with a constant current rate of 3.0 C until a voltage of 2.8 V (vs. Li) was reached during discharging (6th cycle).

In all charge/discharge cycles, a 10-minute stop time was provided after every one charge/discharge cycle. Some of the results of the room-temperature charge/discharge test are shown in Table 4. High-rate capability is defined by Equation 4.

## Equation 4

$$\text{High-rate capability (\%)} = (\text{discharge capacity in 5}^{th}\text{ cycle/discharge capacity in 1}^{st}\text{ cycle}) \times 100\ \%$$

**Table 4**

| | Electrode type or kind | Arrangement of current collector | Presence or absence of through-hole// shape/burr | D1 (Through-hole diameter, $\mu$m) | A1 (Through-hole area, %) | d1/T1 (ratio of through-hole diameter/ electrode thickness) | High rate capability (2C/0.2C) [%] |
|---|---|---|---|---|---|---|---|
| Example 1 | Dry | Total | Yes/○/- | 1 | 1 | 1/100 | 70.5 |
| Example 2 | Dry | Total | Yes/○/- | 1 | 5 | 1/100 | 65 |
| Example 3 | Dry | Total | Yes/○/- | 1 | 0.2 | 1/100 | 57.2 |
| Example 4 | Dry | Total | Yes/○/- | 10 | 1 | 10/100 | 60.5 |
| Example 5 | Dry | Total | Yes/○/- | 0.1 | 1 | 0.1/100 | 60.1 |
| Example 6 | Dry | Partial | Yes/○/- | 1 | 1 | 1/100 | 55.3 |
| Comparative Example 1 | Wet | Total | Yes/○/burr | 1 | 1 | 1/100 | 42.5 |
| Comparative Example 2 | Wet | Total | Absent | - | - | - | 35 |
| Comparative Example 3 | Dry | Total | Absent | - | - | - | 39.8 |

As shown in Table 4, the lithium batteries of Examples 1 to 6 had improved high-rate capability compared to the lithium batteries of Comparative Examples 1 to 3.

In particular, the lithium batteries of Examples 1 to 6 employing a cathode including through-holes exhibited improved high-rate capability compared to the lithium batteries of Comparative Examples 2 and 3 employing a cathode free of through-holes.

The lithium batteries of Examples 1 to 6 employing a dry cathode including burr-free through-holes exhibited improved high-rate capability compared to the lithium battery of Comparative Example 1 employing a wet cathode including through-holes with a burr.

According to aspects of the embodiments of the present disclosure, due to inclusion of through-holes in an electrode active material layer, a lithium battery employing such an electrode may have improved cycle characteristics.

According to aspects of one or more embodiments of the present disclosure, as constituent components are uniformly distributed inside an electrode, a lithium battery employing such an electrode may have improved high-rate capability.

## Claims

1. An electrode (300) comprising:

   an electrode active material layer (100) comprising an electrode active material and a binder, and having a plurality of through-holes (TH);
   an electrode current collector (200) on one surface of the electrode active material layer or between two surfaces (100A, 100B) of the electrode active material layer (100); and
   an interlayer (250, 250a, 250b) between the electrode active material layer (100) and the electrode current collector (200),
   wherein the electrode active material layer (100) is a self-standing film, and

the plurality of through-holes (TH) of the electrode active material layer (100) extend to the interlayer (250, 250a, 250b).

2.  The electrode of claim 1, wherein the electrode current collector (200) defines a bottom portion of the plurality of through-holes (TH), and blocks one end of the plurality of through-holes (TH).

3.  The electrode of claim 1 or 2, wherein the electrode (300) is free of any burr or detent in an area extending from the electrode current collector (200) to the plurality of through-holes (TH),

    wherein the electrode current collector (200) comprises a base film and a metal layer disposed on one or both sides of the base film,
    the base film comprises a polymer, and the polymer comprises polyethylene terephthalate (PET), polyethylene (PE), polypropylene (PP), polybutylene terephthalate (PBT), polyimide (PI), or a combination thereof,
    the metal layer comprises indium (In), copper (Cu), magnesium (Mg), stainless steel, titanium (Ti), iron (Fe), cobalt (Co), nickel (Ni), zinc (Zn), aluminum (Al), Germanium (Ge), lithium (Li), or an alloy thereof.

4.  The electrode of any one of the preceding claims, wherein the interlayer (250, 250a, 250b) is between the plurality of through-holes (TH) and the electrode current collector (200), and separates the plurality of through-holes (TH) and the electrode current collector (200).

5.  The electrode of any one of the preceding claims, wherein a diameter of one end of each of the plurality of through-holes (TH) in contact with the interlayer (250, 250a, 250b) or the electrode current collector (200) is greater than a diameter of the other end of each of the plurality of through-holes (TH) exposed to the surface of the electrode active material layer (100).

6.  The electrode of any one of preceding claims, wherein the interlayer (250, 250a, 250b) comprises a binder, the binder comprises at least one selected from a conductive binder and a non-conductive binder, and the binder comprises a fluorine-based binder.

7.  The electrode of claim 6, wherein the interlayer (250, 250a, 250b) further comprises a carbon-based conductive material.

8.  The electrode of any one of preceding claims, wherein one surface of the electrode active material layer (100) has first openings, which correspond to one end of the plurality of through-holes (TH), and a surface area of the first openings is less than or equal to 99 % of a total area of the one surface of the electrode active material layer (100), and a ratio d1/T1 of an average diameter d1 of the plurality of through-holes (TH) to a thickness T1 of the electrode active material layer (100) is in a range of 0.001 to 0.1.

9.  The electrode of any one of preceding claims, wherein the binder is a dry binder, the dry binder comprises a fibrilized binder, and the dry binder comprises a fluorine-based binder.

10. The electrode of any one of preceding claims, wherein the electrode active material layer (100) further comprises a conductive material, the conductive material is a dry conductive material, and the dry conductive material comprises a carbon-based conductive material.

11. The electrode of any one of preceding claims, wherein the electrode current collector (200) is on a portion of the one surface of the electrode active material layer or on a portion between the two surfaces (100A, 100B) of the electrode active material layer (100),

    wherein the electrode (300) comprises:

        a first domain (D1) comprising the electrode active material layer (100) and the electrode current collector (200) on the one surface of the electrode active material layer or between the two surfaces (100A, 100B) of the electrode active material layer (100); and
        a second domain (D2) comprising the electrode active material layer (100) and free of the electrode current collector (200) on the one surface of the electrode active material layer or between the two surfaces (100A, 100B) of the electrode active material layer (100),

wherein the first domain (D1) and the second domain (D2) comprise the plurality of through-holes (TH),
wherein the electrode active material layer (100) comprises:

a first surface (S1) and a second surface (S2) opposite to the first surface (S1);
a first side surface (SS1) connected to lengthwise ends of the first surface (S1) and lengthwise ends the second surface (S2);
a second side surface (SS2) opposite to the first side surface (SS1); and
a third side surface (SS3) connected to widthwise ends of the first surface (S1) and widthwise ends of the second surface (S2) and a fourth side surface (SS4) opposite to the third side surface (SS3),

wherein the first domain (D1) is defined by the first surface (S1), the second surface (S2), the third side surface (SS3), and the fourth side surface (SS4), and is a domain comprising the electrode current collector (200) between the first surface (S1) and the second surface (S2), and
the second domain (D2) is defined by the first surface (S1), the second surface (S2), the third side surface (SS3), and the fourth side surface (SS4), and is a domain free of the electrode current collector (200) arranged between the first surface (S1) and the second surface (S2).

12. The electrode of claim 11, wherein the electrode active material layer (100) has a first area (A1) defined by a first distance in a lengthwise direction (L1) and a first distance in a widthwise direction (W1) of the electrode active material layer (100),

the electrode current collector (200) has a second area (A2) defined by a second distance in a lengthwise direction (L2) and a second distance in a widthwise direction (W2) of the electrode current collector (200), and
the second area (A2) of the electrode current collector (200) is less than or equal to 100 % of the first area (A1) of the electrode active material layer (100).

13. The electrode of claim 12, wherein the second distance in the lengthwise direction (L2) of the electrode current collector (200) is less than or equal to 100 % of the first distance in the lengthwise direction (L1) of the electrode active material layer (100),

the second distance in the widthwise direction (W2) of the electrode current collector (200) is less than or equal to 100 % of the first distance in the widthwise direction (W1) of the electrode active material layer (100), or
the second distance in the lengthwise direction (L2) of the electrode current collector (200) is less than or equal to 100 % of the first distance in the lengthwise direction (L1) of the electrode active material layer (100), and
the second distance in the widthwise direction (W2) of the electrode current collector (200) is less than or equal to 100 % of the first distance in the widthwise direction (W1) of the electrode active material layer (100).

14. A lithium battery (1000) comprising:

a cathode (300a);
an anode (300b); and
an electrolyte between the cathode (300a) and the anode (300b),
wherein at least one of the cathode (300a) or the anode (300b) comprises the electrode (300) of any one of the preceding claims.

15. A method of preparing an electrode (300), the method comprising:

preparing a dry mixture by dry-mixing an electrode active material, a dry conductive material, and a dry binder;
preparing a self-standing film by rolling or squeezing the dry mixture;
introducing a plurality of through-holes (TH) into the self-standing film;
applying an electrode current collector (200) having an interlayer (250, 250a, 250b) on one surface of the electrode current collector or two surfaces of the electrode current collector (200); and
arranging the self-standing film on the one surface of the electrode current collector (200) or the two surfaces of the electrode current collector (200).

# FIG. 1A

# FIG. 1B

# FIG. 2A

d1

DT

Ta

T1

Tb

100A
100a
200
100b
100B

TH

100a ⎫
100b ⎬ 100 ⎫
        ⎬ 300
200   ⎭

# FIG. 2B

TH

d1

T1

100 ⎫
    ⎬ 300
200 ⎭

DT

100A

# FIG. 3A

da

Ta

T1

Tb

TH

100A
100a
250a
200
250b
100b
100B

100a ⎫
100b ⎬ 100
200 ⎬ 300
250a ⎫
250b ⎬ 250

db

# FIG. 3B

da

TH

T1

db

100 ⎫
250 ⎬ 300
200 ⎭

100A

# FIG. 4

EP 4 228 021 A1

# FIG. 5

EP 4 228 021 A1

# FIG. 6A

D2　　　　　　　　　　　　　　　　　　D1

d1

T1

TH

100A
100a
250a
200
250b
100b
100B

$\left.\begin{matrix}100a\\100b\end{matrix}\right\}100$
$\left.200\right\}300$
$\left.\begin{matrix}250a\\250b\end{matrix}\right\}250$

# FIG. 6B

D2　　　　　　　　　　　　　　　　　　D1

TH

d1

T1

$\left.100\right\}$
$\left.\begin{matrix}250\\200\end{matrix}\right\}300$

100A

# FIG. 7

EP 4 228 021 A1

# FIG. 8

# FIG. 9A

# FIG. 9B

# FIG. 9C

# FIG. 9D

# FIG. 9E

# FIG. 9F

# FIG. 10

# FIG. 11

# FIG. 12

1000

Ta —□— 300a
— 400
□ 300b
Tb
— 400
Ta —□— 300a
— 400
□ 300b
Tb
— 400
Ta —□— 300a
— 400
□ 300b
Tb

500

SS7          SS8

# FIG. 13

# FIG. 14

# FIG. 15

1b

4b
2b
4b
3b

7b

8b

5b

Europäisches Patentamt
European Patent Office
Office européen des brevets

# EUROPEAN SEARCH REPORT

Application Number

EP 23 15 4601

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/236782 A1 (OZAKI KOUKI [JP] ET AL) 12 September 2013 (2013-09-12) * paragraph [0023] - paragraph [0052]; figures 1, 3-8 * | 1-15 | INV. H01M4/04 H01M4/131 H01M4/136 H01M4/1391 |
| A | KR 102 348 796 B1 (KERI KOREA ELECTROTECHNOLOGY RES INST [KR]) 6 January 2022 (2022-01-06) * paragraph [0022] - paragraph [0032]; figure 1 * | 1-15 | H01M4/1397 H01M4/36 H01M4/48 H01M4/485 H01M4/58 |
| A | US 2021/050599 A1 (LEE SEUNGHUN [KR] ET AL) 18 February 2021 (2021-02-18) * paragraph [0071] - paragraph [0137]; figures 2A-12 * | 1-15 | H01M4/62 H01M4/66 H01M4/70 H01M10/052 |
| A | JP 2019 186202 A (NINGDE CONTEMPORARY AMPEREX TECH LTD) 24 October 2019 (2019-10-24) * paragraph [0045] - paragraph [0090]; figures 1-13 * | 1-15 | ADD. H01M4/02 |

TECHNICAL FIELDS SEARCHED (IPC)

H01M

The present search report has been drawn up for all claims

| Place of search | Date of completion of the search | Examiner |
|---|---|---|
| The Hague | 10 July 2023 | Pipoli, Tiziana |

# EP 4 228 021 A1

## ANNEX TO THE EUROPEAN SEARCH REPORT
## ON EUROPEAN PATENT APPLICATION NO.

EP 23 15 4601

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2023

| Patent document cited in search report | | | Publication date | Patent family member(s) | | | Publication date |
|---|---|---|---|---|---|---|---|
| US 2013236782 | A1 | | 12-09-2013 | CN | 103310993 | A | 18-09-2013 |
| | | | | JP | 2013187468 | A | 19-09-2013 |
| | | | | KR | 20130103361 | A | 23-09-2013 |
| | | | | KR | 20140005286 | U | 10-10-2014 |
| | | | | TW | M493163 | U | 01-01-2015 |
| | | | | TW | 201347276 | A | 16-11-2013 |
| | | | | US | 2013236782 | A1 | 12-09-2013 |
| KR 102348796 | B1 | | 06-01-2022 | NONE | | | |
| US 2021050599 | A1 | | 18-02-2021 | KR | 20210020850 | A | 24-02-2021 |
| | | | | US | 2021050599 | A1 | 18-02-2021 |
| JP 2019186202 | A | | 24-10-2019 | CN | 110247057 | A | 17-09-2019 |
| | | | | EP | 3547406 | A2 | 02-10-2019 |
| | | | | JP | 2019186202 | A | 24-10-2019 |
| | | | | US | 2019305320 | A1 | 03-10-2019 |

EPO FORM P0459

For more details about this annex : see Official Journal of the European Patent Office, No. 12/82